# EUROPEAN PATENT SPECIFICATION

(11) **EP 4 027 602 B1**
(45) Date of publication and mention of the grant of the patent: **16.07.2025**
(21) Application number: 20865990.4
(22) Date of filing: 18.09.2020
(51) Int. Cl.: G06F 21/44, H04L 9/40, H04W 8/20, H04W 12/30, H04W 12/40, H04W 4/50, H04W 8/24, H04L 67/303, H04W 4/70, H04L 9/32, H04L 9/08

(54) **MUTUAL DEVICE-TO-DEVICE AUTHENTICATION METHOD AND DEVICE DURING DEVICE-TO-DEVICE BUNDLE OR PROFILE TRANSFER**
VERFAHREN UND VORRICHTUNG ZUR GEGENSEITIGEN AUTHENTIFIZIERUNG VON GERÄT ZU GERÄT WÄHREND DER ÜBERTRAGUNG VON BÜNDELN ODER PROFILEN VON GERÄT ZU GERÄT
PROCÉDÉ ET DISPOSITIF D'AUTHENTIFICATION MUTUELLE DE DISPOSITIF À DISPOSITIF PENDANT UN TRANSFERT DE LOT OU DE PROFIL DE DISPOSITIF À DISPOSITIF

(30) Priority: 20.09.2019 KR 20190116363; 25.02.2020 KR 20200023247; 14.07.2020 KR 20200086975
(43) Date of publication of application: 13.07.2022
(73) Proprietor: Samsung Electronics Co., Ltd., Suwon-si, Gyeonggi-do 16677 (KR)
(72) Inventor: LIM, Taehyung, Suwon-si, Gyeonggi-do 16677 (KR); KOO, Jonghoe, Suwon-si, Gyeonggi-do 16677 (KR); YOON, Kangjin, Suwon-si, Gyeonggi-do 16677 (KR); LEE, Duckey, Suwon-si, Gyeonggi-do 16677 (KR); LEE, Hyewon, Suwon-si, Gyeonggi-do 16677 (KR)
(74) Representative: HGF
(86) International application number: PCT/KR2020/012651
(87) International publication number: WO 2021/054780

(56) References cited:
- KR-A- 20130 033 388
- KR-A- 20170 098 110
- KR-A- 20170 140 809
- US-A1- 2015 178 495
- US-A1- 2016 241 537
- US-A1- 2019 075 453
- US-B1- 10 187 784
- ANONYMOUS: "Smart Cards; Smart Secure Platform (SSP); Requirements Specification TECHNICAL SPECIFICATION", 31 May 2019 (2019-05-31), pages 1 - 52, XP055981589, Retrieved from the Internet <URL:https://www.etsi.org/deliver/etsi_ts/103400_103499/103465/15.00.00_60/ts_103465v150000p.pdf> [retrieved on 20221115]
- SAMSUNG R&D INSTITUTE UK: "CR 103 666-2 Capability negotiation with a custodian OID", vol. WG SCP TEC SCP-TEC, 5 July 2019 (2019-07-05), pages 1 - 9, XP014349825, Retrieved from the Internet <URL:docbox.etsi.org/SCP/SCP-WG-T/05-CONTRIBUTIONS/2019/SCPTEC(19)000124r2_pCR_103_666-2_Capability_negotiation_with_a_custodian_OID.docx> [retrieved on 20190705]
- ANONYMOUS: "Smart Cards; Smart Secure Platform (SSP); Requirements Specification", ETSI TS 103 465 V15.0.0, 1 May 2019 (2019-05-01), XP055792338, Retrieved from the Internet <URL:https://cdn.standards.iteh.ai/samples/57770/a3766d9013df4a619af375eddc2abf72/ETSI-TS-103-465-V15-0-0-2019-05-.pdf>

## Description

### TECHNICAL FIELD

The disclosure relates to a method and apparatus for device-to-device mutual authentication, and more particularly, to a method and apparatus for device-to-device mutual authentication for transferring a bundle or profile between devices.

### BACKGROUND ART

To meet the ever-increasing demand with respect to wireless data traffic since the commercialization of the 4G communication system, there have been efforts to develop an advanced 5th generation (5G) system or pre-5G communication system. For this reason, the 5G or pre-5G communication system is also called a beyond 4th-generation (4G) network communication system or post long term evolution (LTE) system. Implementation of the 5G communication system using ultrahigh frequency (millimeter wave (mmWave)) bands, e.g., 60 giga hertz (GHz) bands, is being considered to attain higher data transfer rates. To reduce propagation loss of radio waves and increase a transmission range of radio waves in the ultrahigh frequency bands, beamforming, massive multiple-input multiple-output (MIMO), full dimensional MIMO (FD-MIMO), array antenna, analog beamforming, and large-scale antenna techniques are under discussion. To improve system networks, technologies for advanced small cells, cloud radio access networks (RANs), ultra-dense networks, device to device (D2D) communication, wireless backhaul, moving networks, cooperative communication, coordinated multi-points (CoMP), reception-end interference cancellation and the like are also being developed in the 5G communication system. In addition, in the 5G system, an advanced coding modulation (ACM), e.g., hybrid FSK and QAM modulation (FQAM), sliding window superposition coding (SWSC), and an advanced access technology, e.g., filter bank multi carrier (FBMC), non orthogonal multiple access (NOMA), sparse code multiple access (SCMA) are being developed.

In the meantime, the Internet is evolving from a human-oriented connectivity network where humans generate and consume information to an Internet of things (IoT) network where distributed entities or things send, receive and process information without human intervention. Internet of Everything (IoE) technologies, in which a big data processing technology through connection with a cloud server, for example, is combined with the loT technology, have also emerged. To implement loT, various technologies, such as a sensing technology, a wired/wireless communication and network infrastructure, a service interfacing technology, and a security technology are required, and even technologies for sensor networks, machine to machine (M2M) communication, machine type communication (MTC) for connection between things are being studied these days. In the loT environment, intelligent Internet technology (IT) services that create new values for human life by collecting and analyzing data generated from connected things may be provided. IoT may be applied to a variety of areas, such as smart homes, smart buildings, smart cities, smart cars or connected cars, smart grids, health care, smart home appliances and advanced medical services through convergence and combination between existing information technologies (IT) and various industrial applications.

In this regard, various attempts to apply the 5G communication system to the loT network are being made. For example, technologies regarding sensor network, M2M, MTC, etc., are implemented by the 5G communication technologies, such as beamforming, MIMO, and array antenna schemes, etc. Even application of a cloud radio access network (cloud RAN) as the aforementioned big data processing technology may be an example of convergence of 5G and IoT technologies.

With the development of the aforementioned mobile communication systems, it is possible to provide various services, and there is a need for a method for effectively providing the services. For example, a method for mutual authentication between two devices is required for bundle or profile (or profile package) transfer between the two devices.

US 2016/241537 discloses a method of transferring a profile by an electronic device and an electronic device supporting the same. The electronic device includes a secure memory that installs and deletes at least one profile, a profile manager module that performs an authentication procedure about a target electronic device based on device information of the target electronic device and profile information of a target profile, when a profile transfer event about a target profile of the at least one profile installed on the secure memory occurs, and a communication interface that transfers the target profile based on an authentication result about the target electronic device. Anonymous, "Smart Cards; Smart Secure Platform (SSP); Requirements Specification TECHNICAL SPECIFICATION", (20190531) provides a requirements specification for the Smart Secure Platform (SSP) standard.

CR 103 666-2, a Change Request bearing the title "Capability Negotiation with a Custodian OID", published on 12 July 2019 in San Diego, US, by Samsung R&D Institute UK, describes a bundle download procedures whereby a capacity negotiation procedure is executed across a Secondary Platform Bundle Loader and an SPB Manager, to ensure the successful authentication and the determination of appropriate cryptographic parameters and algorithms as per the Secondary Platform Bundle family identifier and terminal information submitted to the SPB Manager.

### DESCRIPTION OF EMBODIMENTS

### SOLUTION TO PROBLEM

Embodiments of the disclosure may provide an apparatus and method for enabling mutual authentication between two security modules (or electronic devices) for bundle transfer between security modules included in two electronic devices or profile transfer between the two electronic devices.

### ADVANTAGEOUS EFFECTS OF DISCLOSURE

According to various embodiments of the disclosure, two devices may authenticate each other, and after completion of the authentication, a bundle or profile installed in one device may be transferred to and installed in the other device in a reliable and efficient method.

### BRIEF DESCRIPTION OF DRAWINGS

FIG. 1 is a conceptual diagram of a smart secure platform (SSP), according to an embodiment of the disclosure.
FIG. 2 is a conceptual diagram of an internal configuration of an SSP, according to an embodiment of the disclosure.
FIG. 3 illustrates an example of components in a device used for the device to download and install a bundle into an SSP, according to an embodiment of the disclosure.
FIG. 4 illustrates an example of an interacting method of two devices for bundle transfer between the two devices, according to an embodiment of the disclosure.
FIG. 5 illustrates a configuration of a "verifiable secondary platform bundle loader (SPBL) list (verifiable_SPBL_list)", according to some embodiments of the disclosure.
FIG. 6A illustrates a configuration of a "trusted SPBL list (trusted_SPBL_list)", according to some embodiments of the disclosure.
FIG. 6B illustrates another configuration of a "trusted SPBL list (trusted_SPBL_list)", according to some embodiments of the disclosure.
FIG. 7 is a conceptual diagram of a procedure for transferring a bundle from one device to another, according to an embodiment of the disclosure.
FIG. 8 illustrates a detailed procedure for preparing for bundle transfer in the procedure proposed in FIG. 7.
FIG. 9 illustrates details of a procedure for transferring and installing a bundle in the procedure proposed in FIG. 7.
FIG. 10 illustrates an example of a procedure for generating certificate information that may be provided by an SSP of a device at the request of a local bundle assistant (LBA), according to some embodiments of the disclosure.
FIG. 11 illustrates an example of a procedure in which an SSP of a device identifies received information and generates authentication information to authenticate itself based on the information when receiving certificate information that may be supported from another device, according to some embodiments of the disclosure.
FIG. 12 illustrates an example of a procedure in which a device obtains a "trusted SPBL list (trusted_SPBL_list)", according to some embodiments of the disclosure.
FIG. 13 is a diagram illustrating a configuration of a device, according to some embodiments of the disclosure.
FIG. 14 is a diagram illustrating a configuration of a server, according to some embodiments of the disclosure.
FIG. 15 illustrates an example of an interacting method of two devices for profile transfer between the two devices, according to an embodiment of the disclosure.
FIG. 16 illustrates a configuration of a "trusted certificate issuer (CI) list (trusted_Cl_list)", according to some embodiments of the disclosure.
FIG. 17 illustrates a procedure in which one device transfers a profile to another device, according to some embodiments of the disclosure.
FIG. 18 illustrates operation of a first device, according to some embodiments of the disclosure.
FIG. 19 illustrates operation of a second device, according to some embodiments of the disclosure.
FIG. 20 is a diagram illustrating a configuration of a device, according to some embodiments of the disclosure.
FIG. 21 is a diagram illustrating a configuration of a server, according to some embodiments of the disclosure.
FIG. 22 is a conceptual diagram of a procedure in which one device transfers a profile to another device, according to some embodiments of the disclosure.
FIG. 23 illustrates details of a profile transfer preparation procedure in the procedure proposed in FIG. 22, according to some embodiments of the disclosure.
FIG. 24 illustrates details of mutual authentication procedure between two devices in the procedure proposed in FIG. 22, according to some embodiments of the disclosure.
FIG. 25 illustrates a detailed procedure in which one device transfers a profile to another device and the transferred profile is installed in the procedure proposed in FIG. 22, according to some embodiments of the disclosure.

### BEST MODE

According to an embodiment of the disclosure, a method of providing, by a first device, a profile to a second device in a wireless communication system includes: determining a profile to be transmitted to the second device among profiles installed in the first device; receiving embedded universal integrated circuit card (eUICC) information of the second device from the second device based on connection for communication with the second device; generating authentication information of the first device based on the eUICC information; transmitting the authentication information of the first device to the second device; receiving authentication information of the second device from the second device as a response to the authentication information of the first device; verifying the authentication information of the second device; and transmitting a profile package for the profile to the second device based on a result of the verifying.

According to an embodiment of the disclosure, a method of receiving, by a second device, a profile from a first device in a wireless communication system includes: transmitting eUICC information of the second device to the first device based on connection for communication with the first device; receiving authentication information of the first device from the first device as a response to the eUICC information; verifying the authentication information of the first device; generating authentication information of the second device based on a result of the verifying; transmitting the authentication information of the second device to the first device; and receiving a profile package from the first device as a response to the authentication information of the second device.

According to an embodiment of the disclosure, a method of providing, by a first device, a bundle to a second device includes: obtaining information about a bundle to be transmitted to the second device; transmitting identification information of the bundle to the second device; receiving, from the second device, authentication information relating to bundle transfer of a second smart secure platform (SSP) of the second device; determining whether a second secondary platform bundle loader (SPBL) of the second SSP is a Spbl which is able to receive the bundle based on the authentication information relating to bundle transfer of the second SSP; and transmitting the bundle to the second device based on a result of the determining.

In an embodiment of the disclosure, the identification information of the bundle may include at least one of a bundle family identity (Family ID, Fid) or a bundle family manager identifier (family custodian object ID, Oid) for the bundle.

In an embodiment of the disclosure, the authentication information relating to bundle transfer of the second SSP may include receiving SPBL authentication information determined based on the identification information of the bundle, the determining of whether the second SPBL of the second SSP is a Spbl which is able to receive the bundle may include determining whether the receiving SPBL authentication information is included in at least one of information about a verifiable SPBL or information about a trusted SPBL of the first device, based on the identification information of the bundle, and the information about the verifiable SPBL may be stored in the first device in advance and the information about the trusted SPBL may be received from a server.

According to an embodiment of the disclosure, the information about the trusted SPBL may include a bundle transfer policy information corresponding to the identification information of the bundle, the bundle transfer policy information may include at least one of 1) a condition in which the receiving SPBL authentication information is included in the information about the verifiable SPBL, 2) a condition in which the receiving SPBL authentication information is included in the information about the trusted SPBL, 3) a condition in which the receiving SPBL authentication information is included in both the information about the verifiable SPBL and the information about the trusted SPBL, and 4) a condition in which the receiving SPBL authentication information is included in one of the information about the verifiable SPBL and the information about the trusted SPBL, and the determining of whether the second SPBL of the second SSP is a Spbl which is able to receive the bundle may include determining whether the second SPBL is a Spbl which is able to receive the bundle based on the bundle transfer policy information.

In an embodiment of the disclosure, the authentication information relating to bundle transfer of the second SSP of the second device may include transmitting SPBL authentication information determined based on the identification information of the bundle, and the method may further include determining whether the first SPBL of the first SSP of the first device is a Spbl which is able to transmit the bundle to the second device based on the transmitting SPBL authentication information.

According to an embodiment of the present disclosure, the method may further include: generating authentication information of the first device based on the transmitting SPBL authentication information; transmitting the authentication information of the first device to the second device; receiving authentication information of the second device from the second device; verifying validity of the authentication information of the second device; and transmitting the bundle to the second device based on a result of the verifying.

According to an embodiment of the present disclosure, the method may further include: transmitting a request for information about the trusted SPBL to the server; and receiving the information about the trusted SPBL from the server, and the request for the information about the trusted SPBL may include the identification information of the bundle.

According to an embodiment of the disclosure, a method of receiving by a second device a bundle from a first device includes: receiving identification information of the bundle from the first device; generating authentication information relating to bundle transfer of a second smart secure platform (SSP) of the second device based on the received identification information of the bundle; transmitting the authentication information relating to bundle transfer of the second SSP to the first device; and receiving the bundle from the first device based on a result of verifying by the first device the authentication information relating to bundle transfer of the second SSP.

In an embodiment of the disclosure, the generating of the authentication information relating to bundle transfer of the second SSP may include extracting information corresponding to the identification information of the bundle from information about verifiable secondary platform bundle loader (SPBL) of the second device stored in advance; and generating receiving SPBL authentication information and transmitting SPBL authentication information for the bundle based on the extracted information.

In an embodiment of the disclosure, the generating of the authentication information relating to bundle transfer of the second SSP may include generating information including the verifiable SPBL of the second device stored in advance based on identifying that a bundle family identification (Family ID) and a bundle family manager identifier (family custodian object ID) for the bundle are not included in the received identification information of the bundle.

According to an embodiment of the disclosure, a first device for providing a bundle for the second device includes a transceiver; and at least one processor, wherein the at least one processor is configured to obtain information about a bundle to be transmitted to the second device, control the transceiver to transmit identification information of the bundle to the second device, control the transceiver to receive, from the second device, authentication information relating to bundle transfer of a second smart secure platform (SSP) of the second device, determine whether a second secondary platform bundle loader (SPBL) of the second SSP is a Spbl which is able to receive the bundle based on the authentication information relating to bundle transfer of the second SSP, and control the transceiver to transmit the bundle to the second device based on a result of the determining.

In an embodiment of the disclosure, a second device for receiving a bundle from a first device includes: a transceiver; and at least one processor configured to: control the transceiver to receive identification information of the bundle from the first device, generate authentication information relating to bundle transfer of a second smart secure platform (SSP) of the second device based on the received identification information of the bundle, control the transceiver to transmit the authentication information relating to bundle transfer of the second SSP to the first device, and control the transceiver to receive the bundle from the first device based on a result of verifying by the first device the authentication information relating to bundle transfer of the second SSP.

### MODE OF DISCLOSURE

Embodiments of the disclosure will now be described in detail with reference to accompanying drawings.

Technological content well-known in the art or not directly related to the disclosure is omitted in the following description. Through the omission of content that might otherwise obscure the subject matter of the disclosure, the subject matter will be understood more clearly.

For the same reason, some parts in the accompanying drawings are exaggerated, omitted or schematically illustrated. The size of the respective elements may not fully reflect their actual size. Like numbers refer to like elements throughout the drawings.

Advantages and features of the disclosure, and methods for attaining them will be understood more clearly with reference to the following embodiments of the disclosure, which will be described in detail later along with the accompanying drawings. The embodiments of the disclosure may, however, be embodied in many different forms and should not be construed as limited to the embodiments set forth herein; rather, these embodiments of the disclosure are provided so that this disclosure will be thorough and complete, and will fully convey the scope of the embodiments of the disclosure to those of ordinary skilled in the art. Like numbers refer to like elements throughout the specification.

It may be understood that respective blocks and combinations of the blocks in processing flowcharts will be performed by computer program instructions. The computer program instructions may be loaded on a processor of a universal computer, a special-purpose computer, or other programmable data processing equipment, and thus they generate means for performing functions described in the block(s) of the flowcharts when executed by the processor of the computer or other programmable data processing equipment. The computer program instructions may also be stored in computer-usable or computer-readable memories oriented for computers or other programmable data processing equipment, so it is possible to manufacture a product that contains instruction means for performing functions described in the block(s) of the flowchart. The computer program instructions may also be loaded on computers or programmable data processing equipment, so it is possible for the instructions to generate a process executed by the computer or the other programmable data processing equipment to provide steps for performing functions described in the block(s) of the flowchart.

Furthermore, each block may represent a part of a module, segment, or code including one or more executable instructions to perform particular logic function(s). It is noted that the functions described in the blocks may occur out of order in some alternative embodiments. For example, two successive blocks may be performed substantially at the same time or in reverse order, depending upon the functionality involved.

Furthermore, the term 'unit' or 'module' as herein used refers to a software or hardware component, such as field programmable gate array (FPGA) or application specific integrated circuit (ASIC) which plays some role. However, the module is not limited to software or hardware. The module may be configured to be stored in an addressable storage medium, or to execute one or more processors. For example, the modules may include components, such as software components, object-oriented software components, class components and task components, processes, functions, attributes, procedures, subroutines, segments of program codes, drivers, firmware, microcodes, circuits, data, databases, data structures, tables, arrays, and variables. Functions served by components and modules may be combined into a smaller number of components and modules, or further divided into a higher number of components and modules. Moreover, the components and modules may be implemented to execute one or more central processing units (CPUs) in a device or security multimedia card.

Throughout the specification, modifiers such as first, second, and the like before terms may be used to distinguish the terms from one another in describing embodiments. Terms after the modifiers such as first, second, and the like may indicate different objects. Alternatively, terms after the modifiers such as first, second, and the like may indicate the same object. That is, the modifiers such as first, second, and the like may be used to indicate the same object from different perspectives. For example, the modifiers such as first, second, and the like may be used to classify the same object from functional or operational perspectives. For example, a first user and a second user may indicate the same user.

Throughout the disclosure, each embodiment will be described by focusing on a smart secure platform (SSP) as an example of a security medium, but the scope of the disclosure is not limited to the SSP. For example, it is obvious to those of ordinary skill in the art that various embodiments, which will be described below, may be substantially equally or similarly applied to other security media that perform substantially the same or similar functions to the SSP.

Particular terms as herein used may be provided to help understanding the disclosure, and may be modified to such an extent that does not deviate from the technical scope of the disclosure.

A secure element (SE) refers to a security module comprised of a single chip that stores security information (e.g., a mobile communication network access key, user identification information such as an identity (ID) card/passport, credit card information, an encryption key, etc.) and that may be equipped with and may operate a control module (e.g., a network access control module such as a universal subscriber identity module (USIM), an encryption module, a key generation module, etc.) to use the stored security information. The SE may be used in various electronic devices (e.g., a smart phone, a tablet, a wearable device, an automobile, an IoT device, etc.), and may provide a security service (e.g., mobile communication network access, payment, user authentication, etc.) using the security information and the control module.

The SE may be classified into a universal integrated circuit card (UICC), an embedded secure element (eSE), and a smart secure platform (SSP) that is an integrated form of the UICC and eSE, and may be subdivided into a removable type, an embedded type, and an integrated type integrated into a particular device or system on chip (SOC) depending on a form that is connected to or installed on the electronic device.

The UICC is a smart card used while inserted to a mobile communication terminal, and is also called a UICC card. The UICC may include an access control module to access a network of a mobile communication operator. Examples of the access control module may include a USIM, a subscriber identity module (SIM), an IP multimedia service identity module (ISIM), etc. A UICC including the USIM is often called a USIM card. Likewise, a UICC including the SIM is called a SIM card. In the meantime, an SIM module may be equipped in the UICC card in a manufacturing stage, or an SIM module of a mobile communication service to be used at a time desired by the user may be downloaded onto the UICC card. Furthermore, a plurality of SIM modules may be downloaded and installed in the UICC card, and at least one of the SIM modules may be selected and used. The UICC card may not or may be embedded in a device. A UICC embedded in a device for use is called an embedded UICC (eUICC), and in particular, a UICC embedded in a communication processor, application processor, or SoC having a single processor structure in which the communication processor and the application processor are integrated is called an integrated UICC (iUICC). The eUICC and iUICC may be commonly embedded in the device for use, and may refer to a UICC card including a function that enables at least one SIM module to be remotely downloaded to the UICC card and enables one of the downloaded SIM modules to be selected. In the disclosure, a UICC card including a function that enables at least one SIM module to be remotely downloaded and an SIM module to be selected is generally called the eUICC or iUICC. Specifically, those of UICC cards including the function that enables the SIM module to be remotely downloaded and selected, which are not or are embedded in the device, are commonly called the eUICC or iUICC.

In the disclosure, the terms UICC and SIM may be interchangeably used, and the terms eUICC and eSIM may also be interchangeably used.

A "eUICC identifier (eUICC ID)" may be a unique identifier of the eUICC embedded in the UE, and may be referred to as an EID. Furthermore, in a case that the eUICC is pre-equipped with a provisioning profile, a eUICC identifier (eUICC ID) may be an identifier of the corresponding provisioning profile (a profile ID of the provisioning profile). In an embodiment of the disclosure, when the device and the eUICC chip are not separated, the eUICC ID may be the device ID. Moreover, the eUICC ID may refer to a particular secure domain of the eUICC chip.

An embedded secure element (eSE) refers to an embedded type SE that is used while embedded in an electronic device. The eSE may be commonly manufactured only for a manufacturer of the device at the request of the manufacturer to include an operating system and a framework. A service control module in the form of an applet may be remotely downloaded and installed in the eSE, and the installed service control module may be used for various security services, such as an electronic wallet, ticketing, an electronic passport, a digital key, etc. In the disclosure, the SE in the form of a single chip attached to an electronic device, which enables the service control module to be remotely downloaded and installed, is commonly called the eSE.

A smart secure platform (SSP) refers to a single chip capable of supporting integration of a function of the UICC and a function of the eSE. The SSP may be classified into a removable SSP (rSSP), an embedded SSP (eSSP), and an integrated SSP (iSSP) embedded in a SoC. The SSP may include one primary platform (PP), and at least one secondary platform bundle (SPB) that operates on the PP, The PP may include at least one of a hardware platform or a low level operating system (LLOS), and the secondary platform bundle may include at least one of a high-level operating system (HLOS) and an application driven on the HLOS. The secondary platform bundle may also be called an SPB or a bundle. The bundle may access a resource, such as a central processing unit (CPU) or a memory of the PP through a primary platform interface (PPI), and is thus driven on the PP. The bundle may be equipped with a communication application such as a SIM, a USIM, an ISIM, etc., and further equipped with various applications such as an electronic wallet, ticketing, an electronic passport, a digital key, etc. In the disclosure, the SSP may also be called a smart security medium.

The SSP may be used for the purpose of the aforementioned UICC or eSE depending on the bundle remotely downloaded and installed, and a plurality of bundles may be installed in a single SSP and operated at the same time to be used both for the UICC and the eSE. In other words, when a bundle including a profile is operated, the bundle may be used for the UICC to access a network of a mobile communication operator. For the UICC bundle, at least one profile such as the eUICC or the iUICC may be remotely downloaded into the bundle, and at least one of the profiles may be selected. Furthermore, when a bundle including a service control module equipped with an application for providing e.g., electronic wallet, ticketing, electronic passport or digital key services is operated on the SSP, the SSP may be used for the eSE. Multiple service control modules may be installed and operated in an integrated manner or separately.

The SSP may download and install a bundle from an external bundle management server, i.e., a secondary platform bundle manager (SPB) manager, by using an over the air (OTA) technology, or receive and install a bundle from another device. In the disclosure, a method of downloading and installing a bundle may be equally applied to the removable SSP (rSSP) that may be removably inserted to the device, the embedded SSP (eSSP) that may be installed in the device, and the integrated SSP (iSSP) that may be integrated in an SoC installed in the device.

An SSP identifier (SSP ID) may be a unique identifier of the SSP embedded in the device, and may be referred to as ssplD. Furthermore, when the device and the SSP chip are not separated as in the embodiment of the disclosure, the SSP ID may be a device ID. The SSP ID may also be referred to as a particular bundle ID (SPB ID) in the SSP. Specifically, the SSP ID may be referred to as a bundle identifier of a manager bundle or a loader (i.e., an SPB loader (SPBL)) that manages installation, activation, deactivation, and deletion of another bundle in the SSP. The SSP ID may also be referred to as a primary platform identifier in the SSP. The SSP may also have a plurality of SSP identifiers, which may have values induced from a single unique SSP identifier.

The SPB may be driven by using a resource of the PP on the PP of the SSP, and for example, the UICC bundle may refer to a software type package of an application, a file system, an authentication value, etc., which are stored in the existing UICC, and an operating system, e.g., HLOS, which operates them. In the disclosure, the SPB may be referred to as a bundle.

In the disclosure, a state of the bundle may be as follows:

### [Enabled]

In the disclosure, an operation of a device or an external server to enable a bundle may refer to an operation of changing a state of the corresponding SPB to an enabled state to configure the UE to receive a service provided by the bundle (e.g., a communication service through a mobile operator, a credit card payment service, a user authentication service, etc.). The bundle in the enabled state may be represented as an enabled bundle. The enabled bundle may be stored in an internal or external storage space of the SSP in an encrypted state.

### [Active]

The enabled bundle as disclosed herein may be changed into an active state according to an external input of the bundle (e.g., a user input, push, a request of an application in the device, an authentication request from a mobile operator, a PP management message, etc.) or an operation in the bundle (e.g., timer, polling). The bundle in the active state may refer to a bundle in a state of being loaded onto a driving memory in the SSP from the internal or external storage space of the SSP, of having security information processed by using a secure control device (e.g., secure CPU) in the SSP and of having a security service provided to the device.

### [Disabled]

In the disclosure, an operation of a device or an external server to disable a bundle may refer to an operation of changing the state of the bundle to a disabled state to configure the device to not receive a service provided by the bundle. An SPB of the disabled state may be represented as a disabled bundle. The disabled bundle may be stored in an internal or external storage space of the SSP in an encrypted state.

### [Deleted]

In the disclosure, an operation of a device or an external server to delete a bundle may refer to an operation of changing the state of the bundle to a deleted state or deleting data including and associated with the bundle to configure the device or the external server to not drive, activate or deactivate the bundle any longer. The bundle in the deleted state may be represented as a deleted bundle.

The term 'bundle image' or 'image' may be interchangeably used with the bundle or data object of a particular bundle, and may also be referred to as a bundle tag, length, and value (TLV) or a bundle image TLV. In a case that the bundle image is encrypted with an encryption parameter, the bundle image may be referred to as a protected bundle image (PBI) or a protected bundle image TLV (PBI TLV). When the bundle image is encrypted with an encryption parameter that may be decoded only by a particular SSP, it may be referred to as a bound bundle image (BBI) or a bound bundle image TLV (BBI TLV). The bundle image TLV may be a data set representing information that makes up the bundle in the TLV format.

A bundle classifier may refer to a factor matching a bundle identifier (SPB ID), a bundle family identifier (SPB family ID), a bundle family manager identifier (SPB family custodian object ID), a bundle matching ID, or an event ID. The bundle identifier (SPB ID) may indicate a unique identifier of each bundle. The bundle family identifier may indicate an identifier to identify a type of the bundle (e.g., a telecom bundle for accessing a network of a mobile communication company). In the disclosure, the bundle family identifier may be referred to as a family ID, Fid, or FID. The bundle family manager identifier may refer to an identifier to identify an entity that manages the bundle family identifier (e.g., a mobile operator, a device manufacturer, a particular group, etc.). In the disclosure, the bundle family manager identifier may be referred to as OID or Oid. The bundle classifier may be used as a value to index the bundle in the bundle management server or the device.

The term 'bundle metadata' refers to an information set to indicate or describe the bundle. The bundle metadata may include the bundle classifier. The bundle metadata may further include information about an attribute, a property, or a setting of the bundle. The bundle metadata may be expressed as metadata.

A profile may refer to a data object such as an application, a file system, an authentication key value, etc., stored in the UICC.

In the disclosure, a profile package may refer to content of a profile packaged in the form of software to be installed in the UICC. The profile package may be referred to as a profile package TLV. When the profile package is encrypted with an encryption parameter, it may be referred to as a protected profile package (PPP) or a protected profile package TLV (PPP TLV). When the profile package is encrypted with an encryption parameter that may be decoded only by a particular eUICC, it may be referred to as a bound profile package (BPP) or a bound profile package TLV (BPP TLV). The profile package TLV may be a data set representing information that makes up the profile in the TLV format.

In the disclosure, a profile image may refer to binary data of a profile package installed in the UICC. The profile image may be referred to as a profile TLV or a profile image TLV. When the profile image is encrypted with an encryption parameter, it may be referred to as a protected profile image (PPI) or a protected profile image TLV (PPI TLV). When the profile image is encrypted with an encryption parameter that may be decoded only by a particular eUICC, it may be referred to as a bound profile image (BPI) or a bound profile image TLV (BPI TLV). The profile image TLV may be a data set representing information that makes up the profile in the TLV format.

In the disclosure, a state of the profile may be as follows:

### [Enabled]

In the disclosure, an operation of a device to enable a profile may refer to an operation of changing a state of the profile to an enabled state to configure the device to receive a communication service through a mobile operator that provides the profile. The profile in the enabled state may be represented as an enabled profile.

### [Disabled]

In the disclosure, an operation of a device to disable a profile may refer to an operation of changing a state of the profile to a disabled state to configure the device to not receive a communication service through a mobile operator that provides the profile. The profile in the disabled state may be represented as a disabled profile.

### [Deleted]

In the disclosure, an operation of a device to delete a profile may refer to an operation of changing a state of the profile to a deleted state to configure the device to not activate or deactivate the profile any longer. The profile in the deleted state may be represented as a deleted profile.

In the disclosure, an operation of a device to enable, disable, or delete a profile may also refer to an operation of marking each profile with a expected enabled state, an expected disabled state or an expected deleted state instead of immediately changing the profile into the enabled state, disabled state, or deleted state, and changing each profile into the enabled state, disabled state, or deleted state after the device or the UICC of the device performs a certain operation (e.g., performs a refresh command or a reset command). The operation of marking a certain profile with the expected enabled state, expected disabled state, or expected deleted state is not always limited to marking one profile with one expected state, but may include marking one or more profiles with the same expected state or different expected states, marking one profile with one or more expected states, or marking one or more profiles with the same expected state or one or more different expected states.

Furthermore, when the device marks any profile with one or more expected states, two expected state marks may be combined into one. For example, when an arbitrary profile is marked with the expected disabled state and the expected deleted state, the profile may be marked with an expected disabled and deleted state.

The operation of the device marking one or more profiles with expected states may be sequentially or simultaneously performed. The operation of the device marking one or more profiles with expected states and subsequently changing the actual state of the profile may be sequentially or simultaneously performed.

A profile classifier may refer to a factor matching a profile ID, an integrated circuit card ID (ICCID), a matching ID, an event ID, an activation code, an activation code token, a command code, a command code token, a signed command code, an unsigned command code, an IDS-P or a profile domain (PD). The profile ID may indicate a unique identifier of each profile. The profile classifier may further include an address of a profile providing server (SM-DP+) capable of indexing the profile. The profile classifier may further include a signature of the profile providing server (SM-DP+).

The bundle management server may include a function to generate a bundle at the request of a service provider or another bundle management server, encrypt the generated bundle, create an instruction for remote bundle management, or encrypt the instruction for remote bundle management. The bundle management server providing the function may be represented as at least one of a secondary platform bundle manager (SPBM), a remote bundle manager (RBM), an image delivery server (IDS), subscription manager data preparation (SM-DP), SM-DP plus (SM-DP+), a manager bundler server, managing SM-DP+, a bundle encryption server, a bundle generation server, a bundle provisioner (BP), a bundle provider, or a bundle provisioning credentials holder (BPC holder).

In the disclosure, the bundle management server may serve to manage key and authentication settings for the SSP to download, install, or update a bundle and remotely manage the state of the bundle. The bundle management server providing the function may be represented as at least one of the SPBM, the RBM, the IDS, subscription manager secure routing (SM-SR), a SM-SR plus (SM-SR+), an off-card entity of a eUICC profile manager, a profile management credentials holder (PMC holder), or a eUICC manager (EM).

In the disclosure, the opening relay server may receive a register event request (or event register request) from one or more bundle management servers or another opening relay server. Furthermore, one or more opening relay servers may be used in combination, in which case a first opening relay server may receive the register event request not only from the bundle management server but also a second opening relay server. In the disclosure, the function of the opening relay server may be integrated into the bundle management server. In the disclosure, the opening relay server may be represented as at least one of the SPB manager, the RBM, a secondary platform bundle discovery sever (SPBDS), a bundle discovery sever (BDS), a subscription manager discovery service (SM-DS), a discovery service (DS), a root SM-DS, or an alternative SM-DS.

In the disclosure, the bundle management server may refer to a server that performs both a function of generating, encrypting and transferring a bundle or a bundle management instruction and a function of managing a setting of the SSP and an installed bundle. Furthermore, the bundle management server may refer to a server that may further perform the opening relay server function. Accordingly, in the following various embodiments of the disclosure, operations of the bundle management server and the opening relay server may be performed by one bundle management server. Moreover, each function may be divided onto and performed by multiple separate bundle management servers. In the specification of the disclosure, the bundle management server or the opening relay server may be represented as the bundle server. The bundle server may be a device that corresponds to one of the bundle management server and the opening relay server and includes all the functions and configurations of the bundle management server and the opening relay server.

A remote SIM provisioning server (RSP server) may be used with a name indicating a profile providing server and/or a profile management server and/or an opening relay server, which will be described later. The RSP server may be represented as a subscription manager XX (SM-XX).

In the disclosure, the profile providing server may include a function of generating a profile, encrypting the generated profile, generating a profile remote management instruction, or encrypting the generated profile remote management instruction. The profile providing server may be represented as subscription manager data preparation (SM-DP), subscription manager data preparation plus (SM-DP+), off-card entity of profile domain, a profile encryption server, a profile generating server, a profile provisioner (PP), a profile provider, or a profile provisioning credentials holder (PPC holder).

In the disclosure, the profile management server may include a function of managing the profile. The profile management server may be represented as subscription manager secure routing (SM-SR), subscription manager secure routing plus (SM-SR+), an off-card entity of eUICC profile manager or a profile management credentials holder (PMC holder), a eUICC manager (EM), a profile manager (PP), etc.

In the disclosure, the profile providing server may refer to one to which a function of the profile management server is added. Accordingly, various embodiments of the disclosure, an operation of the profile providing server may be performed by the profile management server. Similarly, an operation of the profile management server or the SM-SR may be performed by the profile providing server.

In the disclosure, the opening relay server may be represented as a subscription manager discovery service (SM-DS), a discovery service (DS), a root SM-DS, or an alternative SM-DS. The opening relay server may receive a register event request (or event register request) from one or more profile providing servers or another opening relay server. Furthermore, one or more opening relay servers may be used in combination, in which case a first opening relay server may receive the register event request not only from the profile providing server but also a second opening relay server.

The service provider may refer to a business entity that requests generation of a bundle by issuing a requirement to the bundle management server, and provides a service to the device through the bundle. For example, the service provider may refer to a mobile operator that provides a communication network access service through a bundle equipped with a communication application, and a business supporting system (BSS), an operational supporting system (OSS), a point of sale (POS) terminal, and other IT systems of the mobile operator may be collectively called the service provider. Furthermore, in the disclosure, the service provider may not exclusively refer to a particular business entity but also refer to a group, association or consortium of one or more business entities or a representative representing the group or association. Moreover, the service provider in the disclosure may be named an operator (OP or Op.), a bundle owner (BO), an image owner (IO), etc., and each service provider may be configured with or allocated at least one of a name and/or an object identifier (OID). When the service provider refers to a group or association or a representative of one or more business entities, the name or OID of any group or association may be shared by all business entities belonging to the group or association or partner business entities of the representative.

A mobile operator may indicate a business entity that provides a communication service for the device, and may collectively indicate all of a business supporting system (BSS), an operational supporting system (OSS), a point of sale (POS) terminal, and other IT systems of the mobile operator. Furthermore, in the disclosure, the mobile operator may not exclusively refer to a particular business entity that provides a communication service but also refer to a group, association or consortium of one or more business entities or a representative representing the group or association. Moreover, in the disclosure, the mobile operator may be named an operator (OP or Op.), a mobile network operator (MNO), a mobile virtual network operator (MVNO), a service provider or SP, a profile owner (PO), etc., and each mobile operator may be configured with or allocated at least one of the name and/or the object identifier (OID) of the mobile operator. When the mobile operator refers to a group or association or a representative of one or more business entities, the name or OID of any group or association may be shared by all business entities belonging to the group or association or partner business entities of the representative.

The term 'subscriber' may be used to indicate a service provider having ownership of the device or an end user having ownership of the device. In general, a device of which the service provider has ownership may be called an M2M device, and a device of which the end user has ownership may be called a consumer device. As for the M2M device, there may be an end user who does not have ownership of the device but takes over or leases the device from the service provider, in which case the subscriber may not or may be the same as the service provider.

Subscriber intent may be used to commonly indicate an intention of the subscriber to manage the bundle locally or remotely. For the local management, the subscriber intent may refer to the end user intent, and for the remote management, the subscriber intent may refer to the service provider intent.

The term "end user consent" may indicate whether the end user agrees to perform local or remote management.

The term 'device' or 'terminal' as herein used may also be referred to as a mobile station (MS), a user equipment (UE), a user terminal (UT), a wireless terminal, an access terminal (AT), a subscriber unit, a subscriber station (SS), a wireless device, a wireless communication device, a wireless transmit/receive unit (WTRU), a mobile node, a mobile, or other names. In various embodiments, the device may include a cellular phone, a smart phone having a wireless communication function, a personal digital assistant (PDA) having a wireless communication function, a wireless modem, a portable computer having a wireless communication function, a capturing device such as a camera with a wireless communication function, a gaming device having a wireless communication function, an appliance for music storage and play with a wireless communication function, an Internet appliance capable of wireless Internet access and browsing, or a portable unit or terminal having the functions in combination. Furthermore, the device may include a machine to machine (M2M) device, or a machine type communication (MTC) terminal/device, without being limited thereto. In the disclosure, the terminal may also be referred to as an electronic device.

In the disclosure, an SSP capable of downloading and installing a bundle may be embedded in the electronic device. When the SSP is not embedded in the electronic device, the SSP physically separated from the electronic device may be inserted and connected to the electronic device. For example, the SSP may be inserted to the electronic device in the form of a card. The electronic device may include a device, which may include the SSP that is capable of downloading and installing a bundle. The SSP may be embedded in the device, or separated from the device in which case the SSP may be inserted and connected to the device.

In the disclosure, a UICC capable of downloading and installing a profile may be embedded in the electronic device. When the UICC is not embedded in the electronic device, the UICC physically separated from the electronic device may be inserted and connected to the electronic device. For example, the UICC may be inserted to the electronic device in the form of a card. The electronic device may include a device, which may include the UICC that is capable of downloading and installing a profile. The SSP may be embedded in the device, or separated from the device in which case the SSP may be inserted and connected to the device. The UICC capable of downloading and installing the profile may be referred to as e.g., eUICC.

The term 'local bundle assistant (LBA)' may refer to software or an application installed in the device or the electronic device to control the SSP. The software or application may refer to a local bundle manager (LBM).

A loader (e.g., SPBL) may be referred to as a manager bundle for managing installation, activation, deactivation and deletion of another bundle on the SSP. The LBA of the device or a remote server may install, activate, deactivate, or delete a particular bundle through the loader. In the disclosure, operations of the loader may be described even as operations of the SSP including the loader.

The term 'local profile assistant (LPA)' may refer to software or an application installed in the device or the electronic device to control the UICC or eUICC in the device or the electronic device.

The term 'event' may be used for the following purposes:

### [A case of being used in association with the bundle]

An event is a collective term for bundle downloading, remote bundle management, or other management/processing instructions for bundles or the SSP. The event may be named a remote bundle provisioning operation or RBP operation, or an event record, and each event may be identified as data including at least one of a corresponding event identifier (event ID or eventID), a matching identifier (matching ID or matchingID), an address (FQDN, IP address, or URL) of a bundle management server or an opening relay server storing the event, or an identifier of each server. Bundle download may be interchangeably used with bundle installation. The term 'event type' may be used as a term indicating whether a particular event is bundle downloading, remote bundle management (e.g., deletion, activation, deactivation, replacement, update, etc.), or a command to manage/process other bundles or the SSP. Furthermore, the event type may be named an operation type or OperationType, an operation class or OperationClass, an event request type, an event class, an event request class, etc.

The local bundle management may be named bundle local management, local management, local management command, local command, LBM package, bundle local management package, local management package, local management command package, local command package, etc. The LBM may be used to install any bundle, change the state of a particular bundle (enabled, disabled, or deleted state) by software installed in the device, or update content of a particular bundle (e.g., bundle nickname, bundle metadata, etc.). The LBM may include one or more local management commands, and a target bundle of each local management command may be the same or different.

The remote bundle management (RBM) may be named bundle remote management, remote management, remote management command, remote command, RBM package, bundle remote management package, remote management package, remote management command package, remote command package, etc. The RBM may be used to install any bundle, change the state of a particular bundle (enabled, disabled, or deleted state), or update content of a particular bundle (e.g., bundle nickname, bundle metadata, etc.). The RBM may include one or more remote management commands, and a target bundle of each remote management command may be the same or different.

A target bundle may refer to a bundle to be subject to a local management command or a remote management command.

A bundle rule may be used as a term for information to be checked by the device to perform local management or remote management on a target bundle. Furthermore, the bundle rule may be interchangeably used with the term bundle policy, rule, policy, or the like.

### [A case of being used in association with the profile]

An event is a collective term for profile downloading, remote profile management, or other management/processing instructions for profiles or the eUICC. The event may be named a remote SIM provisioning operation or RSP operation, or an event record, and each event may be referred to as data including at least one of a corresponding event identifier (event ID or eventID), a matching identifier (matching ID or matchingID), an address (FQDN, IP address, or URL), a signature, and a digital authentication certificate of a profile providing server (SM-DP+) or the opening relay server (SM-DS) storing the event.

Data corresponding to the event may be referred to as a command code. All or part of a procedure using the command code may be referred to as a command code processing procedure, a command code procedure, or a local profile assistant application programming interface (LPA API). Profile download may be interchangeably used with profile installation.

Furthermore, the event type may be used as a term indicating whether a particular event is profile downloading, remote profile management (e.g., deletion, activation, deactivation, replacement, update, etc.), or a command to manage/process other profiles or the eUICC, and may be named an operation type or OperationType, an operation class or OperationClass, an event request type, an event class, an event request class, etc. An arbitrary event identifier (EventID or MatchinglD) may be allocated a channel in which the device obtains the event identifier (EventID or MatchingID) or a purpose of the use.

The local profile management (LPM) may be named profile local management, local management, local management command, local command, LPM package, profile local management package, local management package, or local management command package, local command package. The LPM may be used to change the state of a particular profile (enabled, disabled, or deleted state) by software installed on the device, or update content of a particular profile (e.g., profile nickname, profile metadata, etc.). The LPM may include one or more local management commands, and a target profile of each local management command may be the same or different.

The remote profile management (RPM) may be named profile remote management, remote management, remote management command, remote command, RPM package, profile remote management package, remote management package, remote management command package, or remote command package. The RPM may be used to change the state of a particular profile (enabled, disabled, or deleted state), or update content of a particular profile (e.g., profile nickname, profile metadata, etc.). The RPM may include one or more remote management commands, and a target profile of each remote management command may be the same or different.

A certificate or a digital certificate may refer to a digital certificate used for mutual authentication based on an asymmetric key comprised of a public key (PK) and a secret key (SK). Each certificate may include one or more PKs, a PK identifier (PKID) corresponding to each PK, an identifier of a certificate issuer (CI) that issues the certificate, and a digital signature. The certificate issuer may be named a certification issuer, a certificate authority (CA), a certification authority, etc. In the disclosure, the PK and the PKID may be used to refer to a particular PK or a certificate including a particular PK, part of the particular PK or part of the certificate including the PK, an operation result (e.g., Hash) value of the particular PK or an operation result (e.g., Hash) value of the certificate including the PK, an operation result (e.g., Hash) value of part of the particular PK or an operation result (e.g., Hash) value of part of the certificate including the PK, storage space storing data, or the like.

A certificate chain or certificate hierarchy may represent correlations between certificates when the certificates (first certificates) issued by the certificate issuer are used to issue other certificates (second certificates) or the second certificates are used to issue third or higher certificates in series. In this case, a CI certificate used to issue the first certificate may be named a root certificate, a highest certificate, a root CI, a root CI certificate, a root CA, a root CA certificate, etc.

In the description of the disclosure, when it is determined that a detailed description of related functions or configurations may unnecessarily obscure the subject matter of the disclosure, the detailed description will be omitted.

Various embodiments of a method and apparatus for transferring and installing a bundle between devices will now be described.

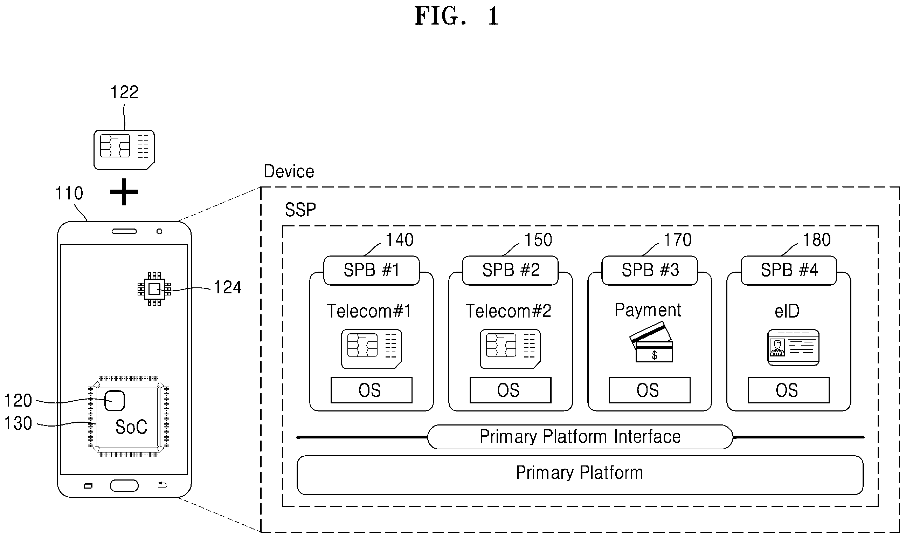

FIG. 1 is a conceptual diagram of an SSP 120, according to an embodiment of the disclosure.

Referring to FIG. 1, a terminal (hereinafter, device) 110 according to an embodiment of the disclosure may include an SSP 120. For example, the SSP 120 may be embedded in a SoC 130 of the device 110. The SoC 130 may be a communication processor, an application processor, or a processor in which the two processors are integrated In another example, the SSP 120 may be a removable type 122 in a separated form without being integrated to the SoC, or an embedded type 124 embedded in the device 110 in advance.

In various embodiments, the SSP 120 included in the device may include at least one of one or more telecom bundles, one or more payment bundles or one or more electronic ID bundles. For example, as shown in FIG. 1, in the case that a plurality of telecom bundles 140 and 150 are included in the SSP 120, the device 110 may use a mobile communication network by simultaneously or time-divisionally operating the plurality of telecom bundles 140 and 150 based on a setting. Furthermore, in a case that the payment bundle 170 and the electronic ID bundle 180 are included in the SSP 120, the device 110 may use online payment through a device app or offline payment through an external credit card point of sale (PoS) device by using the payment bundle 170, and authenticate identity of an owner of the device by using the electronic ID bundle 180.

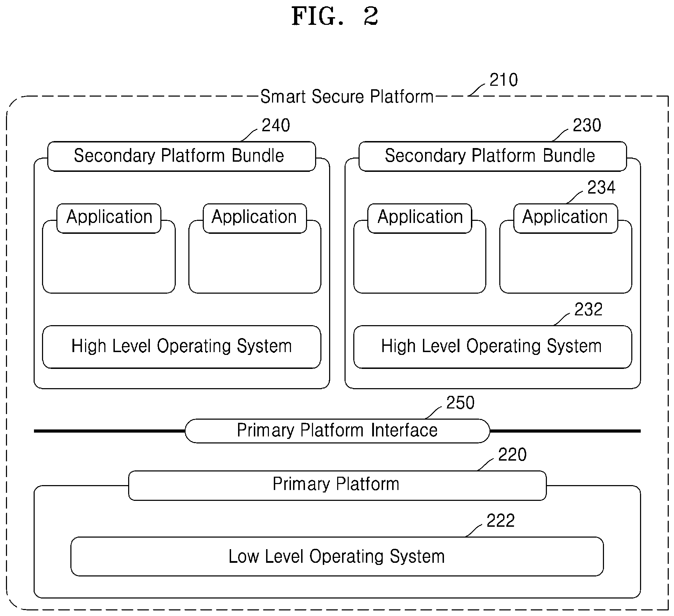

FIG. 2 is a conceptual diagram of an internal configuration of an SSP 210, according to an embodiment of the disclosure.

Referring to FIG. 2, in an embodiment of the disclosure, the SSP 210 may include a primary platform (PP) 220 and at least one secondary platform bundle (SPB) 230 and 240 operating on the PP 220.

In various embodiments, the primary platform 220 may include hardware (not shown) and at least one low-level operating system (LLOS) 222.

In various embodiments, the secondary platform bundle 230 may include a high-level operating system (HLOS) 232 and at least one application 234 operating on the HLOS 232.

In various embodiments, each secondary platform bundle 230 or 240 may access resources such as a CPU, a memory, etc., of the primary platform 220 by using a primary platform interface (PPI) 250 and may operate on the SSP 210 accordingly.

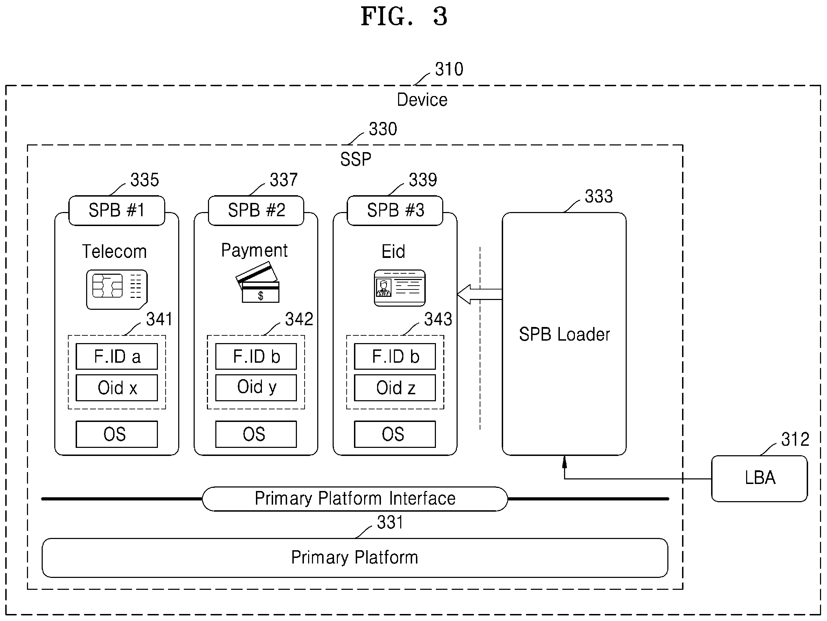

FIG. 3 illustrates an example of components in a device used for the device to download and install a bundle onto an SSP, according to an embodiment of the disclosure.

Referring to FIG. 3, a device 310 according to an embodiment of the disclosure may include an SSP 330 and/or an LBA 312 for controlling the SSP 330. For example, the device 310 may be a device having the SSP 330 and the LBA 312 for controlling the SSP 330 installed therein. For example, the SSP 330 may be embedded in the device 310 or be removable from the device 310.

In various embodiments, the SSP 330 may include at least one of a primary platform 331, a secondary platform bundle loader (SPBL) 333, and one or more secondary platform bundles 335, 337 or 339.

In various embodiments, the secondary platform bundles 335, 337 or 339 may be remotely downloaded and installed after release instead of being installed in the SSP 330 at the time of releasing the device.

In various embodiments, as in the example of FIG. 3, each bundle may have a different bundle family identifier and/or a bundle family manager identifier 341, 342, 343. The bundle family identifier and/or the bundle family manager identifier 341, 342, 343 may be used as information required for downloading and installing the bundle. Specifically, the SSP 330 or the SPBL 333 may allow or reject downloading and installation of a particular bundle based on the bundle family identifier and/or the bundle family manager identifier 341, 342, 343.

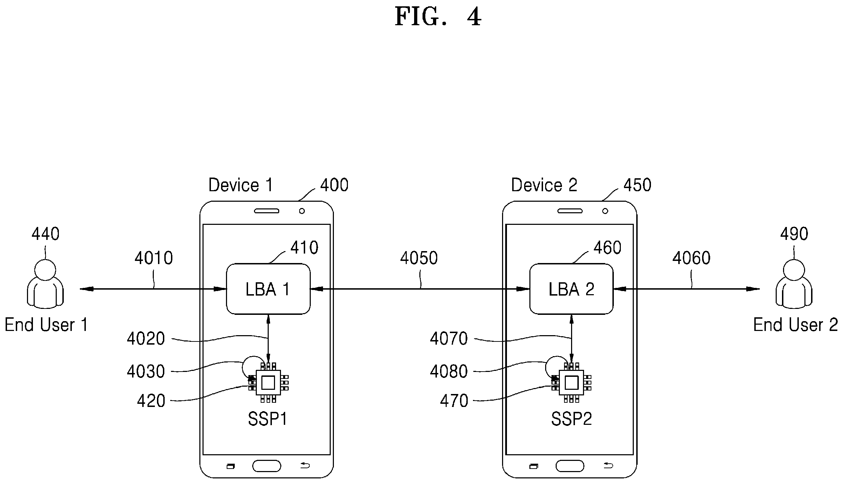

FIG. 4 illustrates an example of an operation method of two devices for bundle transfer between the two devices, according to an embodiment of the disclosure.

Referring to FIG. 4, according to an embodiment of the disclosure, a device may include at least one LBA and at least one SSP. For example, a first device 400 may include a first LBA 410 and a first SSP 420, and a second device 450 may include a second LBA 460 and a second SSP 470.

In various embodiments, the user may send a command to the device or receive, from the device, information to be provided for the user. For example, as in operations 4010 and 4060, a first/second user 440 or 490 may send a command to a first/second LBA 410 or 460 of the first/second device 400 or 450, or receive, from the first/second LBA 410 or 460, information to be provided for the user. The first user 440 and the second user 490 may refer to different users or a same user.

In various embodiments, an operation (hereinafter, a first operation) of the user to send a command to the device or receive, from the device, information to be provided for the user may include a process of the user selecting a bundle to be transmitted. The first operation may further include a process of the user identifying information of the bundle to be received by the user. The first operation may further include a process of the user confirming whether to transmit the bundle to be transmitted. The first operation may further include an operation of confirming whether to transmit a bundle that the user wants to receive. The selecting and confirming operations are separate operations, which may not all be operated or one or more of which may be separately selected and performed.

Furthermore, as in operations 4020 and 4070, the first/second LBA 410 or 460 may send a command to the first/second SSP 420 or 470, or exchange data with the first/second SSP 420 or 470.

In an embodiment, in the operation of the first/second LBA 410 or 460 sending a command to the first/second SSP 420 or 470 or exchanging data with the first/second SSP 420 or 470 (hereinafter, a second operation), each LBA may forward a command of the user received in the first operation to the SSP. Each LBA may receive a result of transmission from the SSP as an outcome of the command forwarded to the SSP.

In another example, in the second operation, each LBA may forward the command or data received from another device or an external server to the SSP. Each LBA may receive a result of transmission from the SSP as an outcome of the command or data forwarded to the SSP.

In various embodiments, in the second operation, each LBA may define a new command and data based on the command of the user or the command or data received from the other device or external server, and may send the new command and data to the SSP. Each LBA may receive a result of transmission from the SSP as an outcome of the new command or data forwarded.

In various embodiments, in the second operation, the first/second LBA 410 or 460 and the first/second SSP 420 or 470 may install a bundle by exchanging data with each other.

In various embodiments, in operation 4050 (hereinafter, a third operation), the first/second LBA 410 or 460 may be connected to each other to send a command to the other or exchange data with each other. In the third operation, the connection of the operation 4050 may be made directly between the first device 400 and the second device 450, or although not shown, may be made indirectly with an external entity (e.g., an external server) between the first LBA 410 and the second LBA 460. Details of a method of connecting between the first LBA 410 and the second LBA 460 will be described with reference to the following drawings.

In various embodiments, in operations 4030 and 4080, the first/second SSP 420 or 470 may generate, process, or verify data required in the first/second SSP 420 or 470.

In various embodiments, in the operation (hereinafter, a fourth operation) of the first/second SSP 420 or 470 generating, processing or verifying the data required in the first/second SSP 420 or 470, each SSP may check a bundle transfer setting. Furthermore, in the fourth operation, each SSP may generate and use a bundle transfer code. Moreover, the bundle transfer setting related operation and the bundle transfer code related operation are separate functions, and the two functions may not all be performed, only one of the two functions may be performed, or the two functions may both be performed. Even in the case that the two functions are both performed, the two functions may be performed completely separately.

In various embodiments, in the fourth operation, each SSP may generate its own SSP information or verify SSP information received from the other device. Furthermore, in the fourth operation, each SSP may generate authentication data to verify itself, and verify the authentication data from the other device.

In various embodiments, in the fourth operation, each SSP may generate or install a bundle.

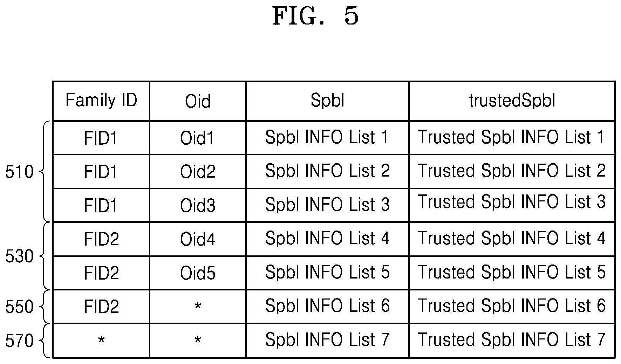

FIG. 5 illustrates a configuration of a "verifiable secondary platform bundle loader (SPBL) list (verifiable_SPBL_list)", according to some embodiments of the disclosure.

The verifiable SPBL list may be provided by an SSP manufacturer for each SPBL, by a device manufacturer, or by cooperation between the SSP manufacturer and the device manufacturer. One SPBL may use the verifiable SPBL list to perform mutual authentication with the other SPBL.

The SPBL, which is an entity to perform verification by using the verifiable SPBL list, will be called SPBL A. Referring to FIG. 5, certificate information to be used by the other SPBL to verify the SPBL A (in the Spbl column of FIG. 5) and certificate information to be used by the SPBL A to verify the other SPBL (in the trustedSpbl column of FIG. 5) may be included in the verifiable SPBL list.

In an embodiment of the disclosure, the certificate information to be used by the other SPBL to verify the SPBL A and the certificate information to be used by the SPBL A to verify the other SPBL may be
a) configured with a bundle family identifier and a bundle family manager identifier allocated thereto (in 510 and 530 of FIG. 5),
b) configured with a bundle family identifier allocated thereto and no bundle family manager identifier allocated thereto (in 550 of FIG. 5), or
c) configured without bundle family identifier and bundle family manager identifier allocated thereto (in 570 of FIG. 5).

The certificate information to be used by the other SPBL to verify the SPBL A may include certificate information to be used by the other SPBL to verify validity of a certificate issued to the SPBL A, a chain of the certificate issued to the SPBL A, and a signature generated by the SPBL A. The certificate information to be used by the SPBL A to verify the other SPBL may include certificate information to be used to verify validity of a certificate issued by the other SPBL to the SPBL A, a certificate chain, and a signature.

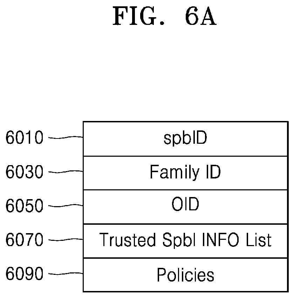

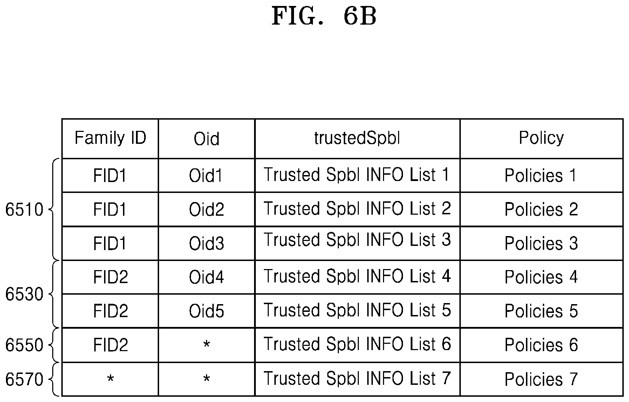

FIGS. 6A and 6B illustrate two possible configurations of a "trusted SPBL list (trusted_SPBL_list)", according to some embodiments of the disclosure.

The trusted SPBL list may be provided by a service provider for each SPBL, by a bundle management server, or by cooperation between the service provider and the bundle management server. One SPBL may use the trusted SPBL list provided to determine whether the other SPBL is trusted.

FIG. 6A illustrates a possible configuration of a "trusted SPBL list (trusted_SPBL_list)", according to some embodiments of the disclosure.

Referring to FIG. 6A, the trusted SPBL list may include information to identify a particular bundle. For example, the trusted SPBL list may include a bundle identifier (spblD) in 6010.

The trusted SPBL list may further include a bundle family identifier (SPB family ID) in 6030 and/or a bundle family manager identifier (SPB family custodian object ID) in 6050 associated with the bundle identified by spblD in 6010.

The trusted SPBL list may further include a receiving SPBL information list in 6070 trusted by the service provider and/or the bundle management server to allow the transmitting SPBL to transmit a bundle identified by spblD in 6010 to the receiving SPBL. The trusted receiving SPBL information list in 6070 may be
a) information to identify a Spbl trusted by the service provider and/or the bundle management server to allow the bundle to be transmitted thereto, or
b) certificate information to authenticate a Spbl trusted by the service provider and/or the bundle management server to allow the bundle to be transmitted thereto.

The trusted SPBL list may further include a policy in 6090 associated with the bundle identified by spblD in 6010. Several examples of the possible policy in 6090 are as follows: In a case that a device or a Spbl intends to transmit the bundle identified by spblD in 6010 to the other device or SPBL, the policy in 6090 to determine whether a Spbl to receive the bundle is trusted may include
a) a policy that the SPBL to receive the bundle is trusted when the SPBL to receive the bundle is included in the verifiable SPBL list of a Spbl to transmit the bundle as described above with reference to FIG. 5,
b) a policy that the SPBL to receive the bundle is trusted when the SPBL to receive the bundle is included in the trusted SPBL list,
c) a policy that the SPBL to receive the bundle is trusted when the SPBL to receive the bundle is included in both the verifiable SPBL list and the trusted SPBL list, or
d) a policy that the SPBL to receive the bundle is trusted when the SPBL to receive the bundle is included in one of the verifiable SPBL list and the trusted SPBL list.

FIG. 6B illustrates another configuration of a "trusted SPBL list (trusted_SPBL_list)", according to some embodiments of the disclosure.

Referring to FIG. 6B, the trusted SPBL list may include a receiving SPBL information list (in trustedSpbl column) trusted by the service provider and/or the bundle management server to allow the transmitting SPBL to transmit a bundle thereto. The trusted receiving SPBL information list of FIG. 6B may correspond to the trusted receiving SPBL information list 6070 of FIG. 6A, so the detailed description will not be repeated. However, the trusted receiving SPBL information list (in trustedSpbl column of FIG. 6B) may be applied not only to a particular bundle (e.g., the bundle identified by spblD in 6010 of FIG. 6A) but also to any bundle, unlike the trusted receiving SPBL information list in 6070 of FIG. 6A. For example, the trusted receiving SPBL information list of FIG. 6B may be used regardless of the transmitted or received bundle identifier (SPB ID). However, as will be described later, the the trusted receiving SPBL information list of FIG. 6B may be used while being mapped to the bundle family identifier (Fid) and/or the bundle family manager identifier (Oid), or may be used regardless of (i.e., without being mapped to) the bundle family identifier (Fid) and the family manager identifier (Oid).

The trusted SPBL list may further include a policy (the policy column of FIG. 6B) to be used in determining whether to trust the receiving SPBL to receive the bundle. Detailed description of the policy of FIG. 6B may correspond to the policy in 6090 of FIG. 6A, so the detailed description will not be repeated.

The trusted receiving SPBL information list and the policy may be
a) configured with a bundle family identifier and a bundle family manager identifier allocated thereto (in 6510 and 6530 of FIG. 6B),
b) configured with a bundle family identifier allocated thereto and no bundle family manager identifier allocated thereto (in 6550 of FIG. 6B), or
c) configured without bundle family identifier and bundle family manager identifier allocated thereto (in 6570 of FIG. 6B).

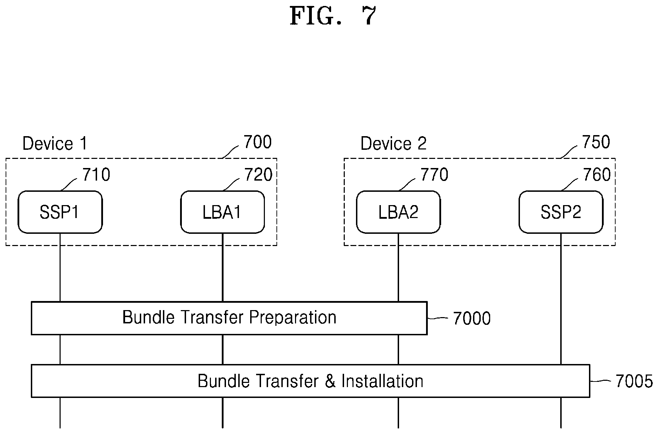

FIG. 7 is a conceptual diagram of a procedure for transferring a bundle from one device to another, according to an embodiment of the disclosure.

Referring to FIG. 7, according to various embodiments, a device may include at least one LBA and at least one SSP. For example, a first device 700 may include a first LBA 720 and a first SSP 710, and a second device 750 may include a second LBA 770 and a second SSP 760. For example, the first device 700 is a device in which the first SSP 710 is equipped and the first LBA 720 for controlling the first SSP 710 is installed, and the second device 750 is a device in which the second SSP 760 is equipped and the second LBA 770 for controlling the second SSP 760 is installed.

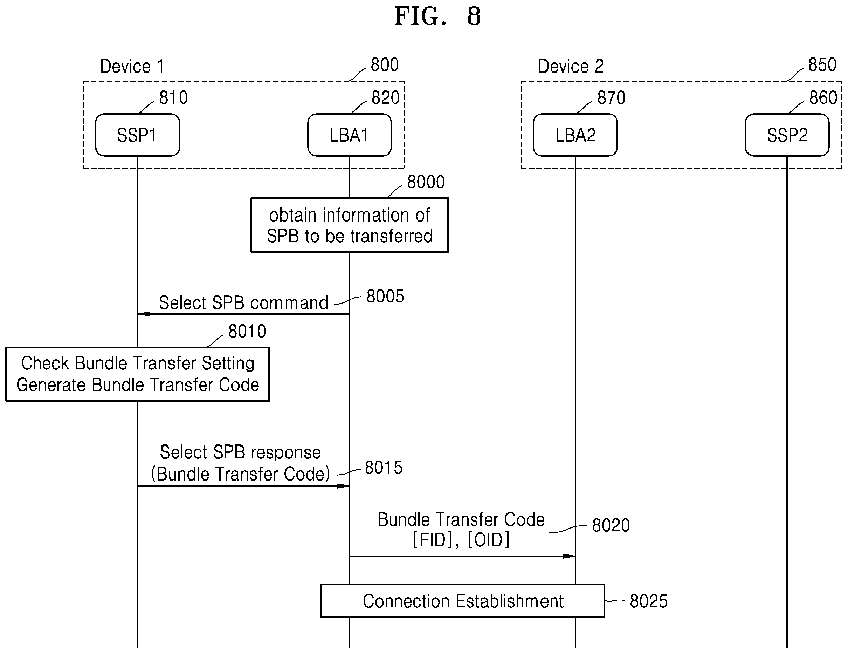

In operation 7000, the first SSP 710 and the first LBA 720 of the first device 700, and the second LBA 770 of the second device 750 may perform a preparation procedure (a bundle transfer preparation procedure) required for bundle transfer. Detailed description of the bundle transfer preparation procedure refers to the description of FIG. 8, which will be described later.

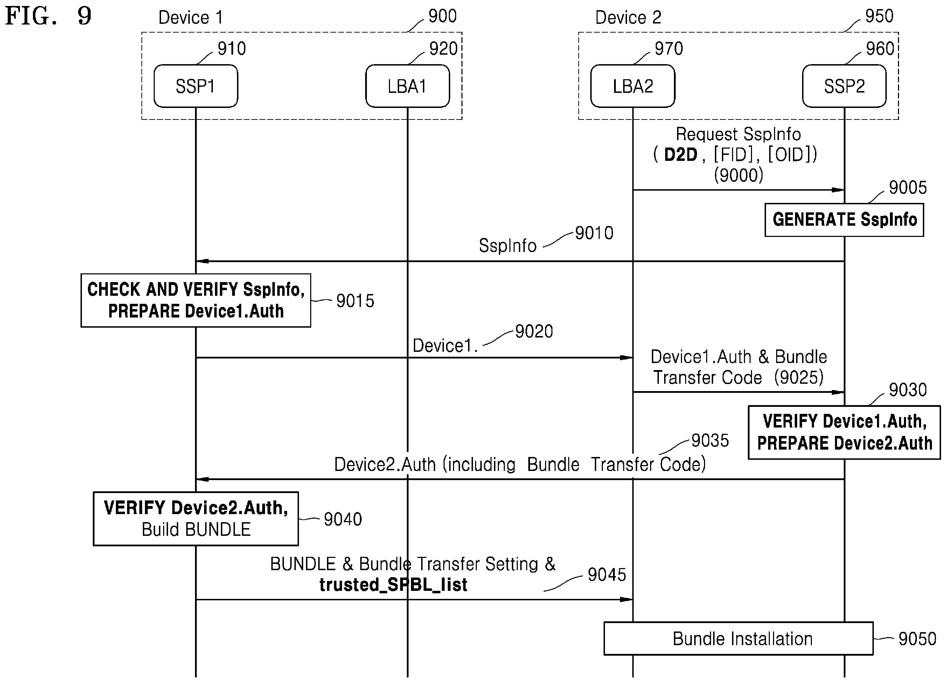

In operation 7005, a procedure in which a bundle is transferred from the first device 700 to the second device 750 and installed in the second device 750 (a bundle transfer and installation procedure) may be performed. Detailed description of the bundle transfer and installation preparation procedure refers to the description of FIG. 9, which will be described later.

FIG. 8 illustrates a detailed procedure for preparing for bundle transfer in the procedure proposed in FIG. 7. Specifically, FIG. 8 illustrates a preparation procedure required by a device to transfer a bundle to another device, according to an embodiment of the disclosure. In the specification, the procedure of FIG. 8 may be referred to as a bundle transfer preparation procedure.

Referring to FIG. 8, according to various embodiments, a device may include at least one LBA and at least one SSP. For example, a first device 800 may include a first LBA 820 and a first SSP 810, and a second device 850 may include a second LBA 8700 and a second SSP 860. For example, the first device 800 is a device in which the first SSP 810 is equipped and the first LBA 820 for controlling the first SSP 810 is installed, and the second device 850 is a device in which the second SSP 860 is equipped and the second LBA 870 for controlling the second SSP 860 is installed.

In various embodiments, the first device 800 may have a pre-installed bundle and further, metadata associated with the pre-installed bundle.

In various embodiments, the first device 800 may have at least one of a bundle identifier (SPB ID), a bundle family identifier (SPB family ID), or a bundle family manager identifier (SPB family custodian object ID) related to the pre-installed bundle.

In various embodiments, the first device 800 may have a bundle transfer setting related to the pre-installed bundle.

The bundle transfer setting may be information about whether the bundle is transferable between devices, which may be generated by a service provider that is a first provider of the bundle, a bundle management server, or cooperation between the service provider and the bundle management server. The bundle transfer setting may be updated by the service provider, the bundle management server, or cooperation between the service provider and the bundle management server. Alternatively, at least one entity among the service provider or the bundle management server may cooperate with the device to update the bundle transfer setting. When and/or how to update may be determined by a policy of the service provider, the bundle management server, a device manufacturer, etc.

The bundle transfer setting may optionally include an indicator (or indication) to indicate whether transfer of the bundle between devices is allowed. The bundle transfer setting may further include an optional indicator that specifies what condition it is, under which the transfer is allowed when the transfer of the bundle between the devices is allowed. For example, information about which connection between the devices is used for the bundle transfer may be included in the bundle transfer setting. In this case, the connection that is possible may be a direct device-to-device connection (e.g., a wireless connection such as NFC, bluetooth, UWB, WiFi-direct, LTE device-to-device (D2D), or 5G D2D, or a wired connection through a cable), or a long distance connection with a remote server (e.g., a relay server) located between the first LBA 820 and the second LBA 870.

Furthermore, a setting for the mutual authentication method by which to transfer a bundle between devices may be included in the bundle transfer setting. For example, in order for a device due to transmit a bundle to authenticate a device to receive the bundle, information about whether additional authentication using the information received from a service provider and/or a bundle management server (e.g., the trusted SPBL list (trusted_SPBL_list) as shown in FIG. 6A or 6B) is needed may also be included in the bundle transfer setting. When the need for the additional authentication is set up, the service provider and/or the bundle management server may provide the authentication information relating to the trusted device and/or the SSP to the device due to transmit the bundle, which may in turn transmit the bundle after authenticating the device to receive the bundle by using the information about whether the device to receive the bundle is trusted by the service provider and/or the bundle management server.

In operation 8000, the first LBA 820 may obtain information of a bundle to be transferred between devices. Alternatively, the information of the bundle to be transferred between the devices may be sent to the first LBA 820. For example, the first LBA 820 may obtain the information of the bundle by receiving a user input of the user selecting the bundle through a user interface (UI) provided by the first device 800, receive the information of the bundle to be transferred through push input from a remote server, or fetch the information of the bundle to be transferred by accessing the remote server.

Furthermore, in operation 8000, the first LBA 820 may determine whether the bundle is allowed to be transferred between the devices based on the bundle transfer setting.

Moreover, in operation 8000, the first LBA 820 may generate bundle transfer information. The bundle transfer information may include a bundle classifier such as a bundle identifier (SPB ID), a bundle family identifier (SPB family ID), or a bundle family manager identifier (SPB family custodian object ID) of the bundle to be transferred. The bundle transfer information may further include other information indicating attributes of the bundle (e.g., metadata or part of the metadata of the bundle). The bundle transfer information may further include an address of the bundle management server (e.g., SPBM Addr) associated with the bundle to be transferred. The bundle transfer information may include information required for connection between the two devices, which is made in operation 8025. For example, information required for wi-fi connection between two devices (e.g., an SSID and/or a BSSID of the first device 800, a pre-shared key to be used for authentication for connection between the two devices, an IP address of the first device 800, or a port number to be used for communication between the two devices) may be included.

In operation 8005, the information relating to the bundle selected (or obtained) in operation 8000 may be sent to the first SSP 810 from the first LBA 820. For example, information relating to the selected bundle may be sent in a Select SPB command to the first SSP 810 from the first LBA 820. The information relating to the bundle sent from the first LBA 820 to the first SSP 810 may include information for identifying the bundle selected in operation 8000.

In operation 8010, the first SSP 810 may determine whether the bundle requested to be transferred is allowed to be transferred between the devices. A process of determining whether the transfer between the devices is allowed may be performed by identifying the bundle requested to be transferred based on the information received in operation 8005 and checking the bundle transfer setting associated with the identified bundle.

Furthermore, in operation 8010, the first SSP 810 may configure a bundle transfer code. The bundle transfer code is a code used to indicate a bundle transferred in the bundle transfer procedure between devices, and has a value for identifying the bundle transferred. The first SSP 810 may bind the bundle transfer code and the information of the bundle to be transferred.

In operation 8015, a response to operation 8005 may be transmitted to the first LBA 820 from the first SSP 810. For example, a response to the Select SPB command of operation 8005 may be sent in a Select SPB response of operation 8015 to the first LBA 820 from the first SPB 810. The response may include the bundle transfer code as described in operation 8010.

In an embodiment of the disclosure, the aforementioned operations 8005 to 8015 may be omitted.

In operation 8020, information required for bundle transfer between devices may be sent to the second LBA 870 of the second device 850 from the first LBA 820 of the first device 800. In this case, the information sent to the second LBA 870 from the first LBA 820 may include the bundle transfer information. Alternatively, the information sent to the second LBA 870 from the first LBA 820 may include the bundle transfer code. Furthermore, the information sent to the second LBA 870 from the first LBA 820 may further include a bundle family identifier (SPB family ID) and/or a bundle family manager identifier (SPB family custodian object ID). Moreover, the information sent to the second LBA 870 from the first LBA 820 may further include information required for connection to be established between the first LBA 820 and the second LBA 870. In addition, the information sent to the second LBA 870 from the first LBA 820 may further include information notifying that bundle transfer between the devices is going to be performed.

The information sent to the second LBA 870 from the first LBA 820 in operation 8020 may be sent in various methods. For example, the first LBA 820 may provide the information to be sent to the second LBA 870 to a first user of the first device 800 through a UI of the first device 800. The first user may provide the received information to a second user of the second device 850. The second user may input the received information to the second LBA 870 through a UI of the second device 850. Alternatively, the first LBA 820 may make the information to be sent to the second LBA 870 in the form of an image (e.g., a QR code) to be displayed on the screen of the first device 800, and the second user may use the second device 850 to scan the image displayed on the screen of the first device 800, thereby sending the information to the second LBA 870. How the information is sent to the second LBA 870 from the first LBA 820 is not, however, limited thereto, and may be variously determined. The first user and the second user may refer to different users or a same user.

In operation 8025, a connection between the first LBA 820 and the second LBA 870 may be established or set up. The first LBA 820 and the second LBA 870 may establish the connection based on the information sent to the second LBA 870 in operation 8020. The connection between the first LBA 820 and the second LBA 870 may be a direct device-to-device connection (e.g., a wireless connection such as NFC, bluetooth, UWB, WiFi-direct, LTE device-to-device (D2D), or 5G D2D, or a wired connection through a cable), or a long distance connection with a remote server (e.g., a relay server) located between the first LBA 820 and the second LBA 870.

Operation 8025 may be performed as the final step. However, operation 8025 is an independent operation from the other operations, i.e., operations 8000, 8005, 8010, and 8025, and performance order of operation 8025 is not limited to what is shown in FIG. 8 and is not related to the performance sequence of the other operations. For example, operation 8025 may be performed between operation 8015 and operation 8020, in which case the information transmitted from the first LBA 820 to the second LBA 870 in operation 8020 may be transmitted through the connection established in operation 8025.

FIG. 9 illustrates details of a procedure for transferring and installing a bundle in the procedure as described in FIG. 7. Specifically, FIG. 9 illustrates a procedure in which a device transfers a bundle to another device and the bundle is installed in the other device, according to an embodiment of the disclosure. In the disclosure, the procedure of FIG. 9 may be referred to as a bundle transfer and installation procedure.

Referring to FIG. 9, according to various embodiments, a device may include at least one LBA and at least one SSP. For example, a first device 900 may include a first LBA 920 and a first SSP 910, and a second device 950 may include a second LBA 970 and a second SSP 960. For example, the first device 900 is a device in which the first SSP 910 is equipped and the first LBA 920 for controlling the first SSP 910 is installed, and the second device 950 is a device in which the second SSP 960 is equipped and the second LBA 970 for controlling the second SSP 960 is installed.

In operation 9000, the second LBA 970 may request SSP information (Ssplnfo) from the second SSP 960. When requesting the SSP information (Sspinfo) from the second SSP 960, the second LBA 970 may notify the second SSP 960 that bundle transfer is going to be performed between devices. Furthermore, for example, a message of the request may include a D2D indicator. The second LBA 970 may notify the second SSP 960 that bundle transfer is going to be performed between devices by including the D2D indicator in the request message or setting a value of the D2D indicator to 1. The second LBA 970 may provide information about the bundle to be transferred between the devices to the second SSP 960. The information may include at least one of a bundle family identifier (SPB family ID) or a bundle family manager identifier (SPB family custodian object ID).

Furthermore, operation 9000 may be automatically performed right after the entire procedure as described above in connection with FIG. 8 or may be performed after an external input is received. In this case, the external input may be a user input with which the second user of the second device directly selects, through a UI provided by the second device 950, a bundle to be received, or a push input entered to the second LBA 970 from a remote server. Furthermore, the second LBA 970 may access the remote server and read out information about the bundle to be received.

In operation 9005, the second SSP 960 may generate its SSP information. The SSP information may include information about the second SSP 960 to be provided for bundle transfer.

In this case, the SSP information may include information (certificate negotiation information) for a certificate negotiation process for the second SSP 960 to undergo before receiving the bundle. The certificate negotiation information may include certificate information (SenderSpblVerification) to be used by the second SSP 960 to verify another SSP and certificate information (ReceiverSpblVerification) to be used by the other SSP to verify the second SSP 960. The certificate negotiation information may further include a list of key agreement algorithms and a list of encryption algorithms supported by the second SSP 960. The second SSP 960 may generate the certificate negotiation information.

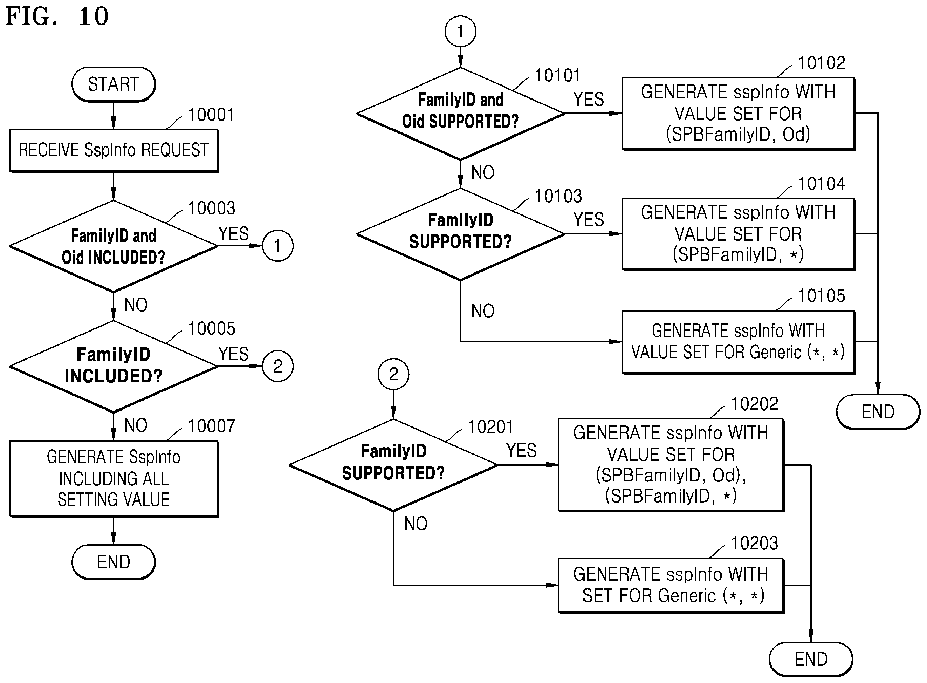

When the second SSP 960 is provided with the bundle family identifier (SPB family ID) and/or the bundle family manager identifier (SPB family custodian object ID) in operation 9000, the certificate negotiation information may sometimes be selected based on the value of the bundle family identifier or the bundle family manager identifier, and the SSP information may further include the bundle family identifier and the bundle family manger identifier along with the certificate negotiation information. A procedure for configuring the certificate negotiation information based on the value of the bundle family identifier or the bundle family manager identifier (in particular, a procedure for configuring SenderSpblVerification and ReceiverSpblVerification) will be described later in detail with reference to FIG. 10.

The SSP information may further include SSP version information including at least one of pieces of standard version information supported by a primary platform and loader included in the second SSP 960.

In operation 9010, the second SSP 960 may send the SSP information generated in operation 9005 to the first SSP 910 through the second LBA 970 and the first LBA 920.

In operations 9000 to 9010, the second LBA 970 may request the SSP information (Ssplnfo) from the second SSP 960, and the second SSP 960 may generate its SSP information and then send the SSP information to the first SSP 910 through the second LBA 970 and the first LBA 920. In some embodiments, however, the second LBA 970 may generate the SSP information by itself and then send the SSP information to the first SSP 910 through the first LBA 920.

In operation 9015, the first SSP 910 may check the received SSP information, and based on the information, generate first device authentication information (Device1.Auth) to authenticate the first SSP 910. A detailed procedure for generating the first device authentication information (Device1.Auth) is as follows:
1) checking procedure

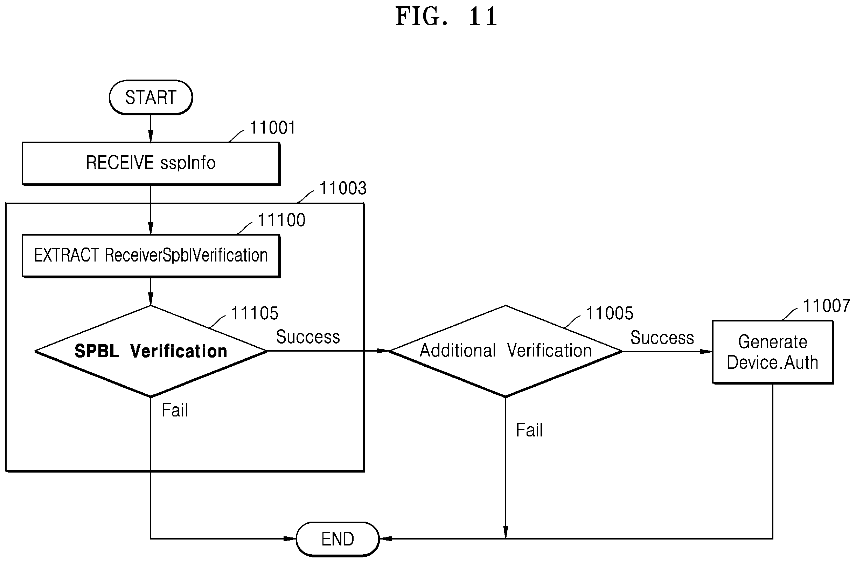

The first SSP 910 may check certificate information to verify the first SSP 910 based on the received "SenderSpblVerification" and select at least one certificate for key agreement (ssp1.Cert.KA). Alternatively, the first SSP 910 may generate a key pair of a public key "ssp1.ePK.KA" and a secret key "ssp1.eSK.KA" for asymmetric encryption to be used for key agreement by using the received key agreement algorithm list supported by the second SSP 960, and select the public key (ssp1.ePK.KA) of the key pair. Furthermore, the first SSP 910 may check certificate information to verify the first SSP 910 based on the received "SenderSpblVerification" and may further select at least one certificate for signature (ssp1.Cert.DS). The procedure in which the first SSP 910 selects the certificate information of the first SSP 910 based on "SenderSpblVerification" will be described later in detail with reference to FIG. 11.

The first SSP 910 may select at least one certificate information of the second SSP 960 to be verified based on the received "ReceiverSpblVerification", and then configure information corresponding to the selected certificate information with "CiPkldToBeUsed". The procedure in which the first SSP 910 selects the certificate information of the second SSP 960 based on "ReceiverSpblVerification" will be described later in detail with reference to FIG. 11.

Furthermore, the first SSP 910 may select at least one encryption algorithm to be used in the future based on a received encryption algorithm list supported by the second SSP 960, and configure information corresponding to the selected encryption algorithm with "CryptoToBeUsed". Moreover, the first SSP 910 may check a received list of standard version information supported by a primary platform and loader included in the second SSP 960 to determine whether there is a standard version supported by the first SSP 910 as well in the list.
2) a procedure for generating first device authentication information

First device authentication information (Device1.Auth) may include at least one of the aforementioned "ssp1.Cert.KA", "ssp1.ePK.KA", "CiPkldToBeUsed", or "CryptoToBeUsed". The first device authentication information (Device1.Auth) may further include the "ssp1.Cert.DS". The first device authentication information (Device1.Auth) may include at least one of a bundle family identifier (SPB family ID) or a bundle family manager identifier (SPB family custodian object ID) associated with a bundle to be transferred in the future.

In this case, part or all of the first device authentication information (Device1.Auth) may be a digital signature to be verified by using ssp1.Cert.DS to secure integrity of the information, and the digital signature data may be added as part of the first device authentication information.

In operation 9020, the first SSP 910 may send the first device authentication information (Device1.Auth) generated in operation 9015 to the second LBA 970 through the first LBA 920.

In operation 9025, the second LBA 970 may send the first device authentication information (Device1.Auth) to the second SSP 960. The second LBA 970 may further send the bundle transfer code to the second SSP 960. The second LBA 970 may further send the second SSP 960 the bundle identifier (SPB ID) of a bundle to be received.

In operation 9030, the second SSP 960 may verify the received first device authentication information (Device1.Auth). When receiving "ssp1.Cert.KA", the second SSP 960 may check the signature of the "ssp1.Cert.KA" to determine validity of the "ssp1.Cert.KA". Furthermore, when receiving "ssp1.ePK.KA" and a corresponding digital signature, the second SSP 960 may check the validity of ssp1.Cert.DS first and then check the digital signature based on the ssp1.Cert.DS, thereby determining integrity of the received public key ssp1.ePK.KA. Moreover, the second SSP 960 may select at least one of certificates for signature (ssp2.Cert.DS) to verify the second SSP 960 based on the received "CiPkldToBeUsed".

Furthermore, in operation 9030, the second SSP 960 may generate a key pair of a public key "ssp2.ePK.KA" and a secret key "ssp2.eSK.KA" for asymmetric encryption to be used for key agreement, and select the public key (ssp2.ePK.KA) of the key pair. In addition, the second SSP 960 may select one of the public key for key agreement included in the ssp1.Cert.KA or the ssp1.ePK.KA, and generate a session key ShKey01 to be used for encryption on communication with the first device 900 in the future based on the selected value and the ssp2.eSK.KA. The ShKey01 may need to be a session key for encryption algorithm included in the received "CryptoToBeUsed".

Furthermore, in operation 9030, the second SSP 960 may generate the second device authentication information (Device2.Auth) to authenticate the second SSP 960. In this case, the second device authentication information (Device2.Auth) may include the "ssp2.Cert.DS". Furthermore, the second device authentication information (Device2.Auth) may include the "ssp2.ePK.KA". The second device authentication information (Device2.Auth) may further include a transaction ID that indicates a current session created by the second SSP 960. The second device authentication information (Device2.Auth) may further include a bundle transfer code. The second device authentication information (Device2.Auth) may further include a bundle identifier of a bundle desired to be received. Furthermore, the second device authentication information (Device2.Auth) may further include an SSP identifier of the second SSP 960. Moreover, the second device authentication information (Device2.Auth) may include at least one of a bundle family identifier (SPB family ID) or a bundle family manager identifier (SPB family custodian object ID) associated with a bundle to be transferred in the future.

In this case, part or all of the second device authentication information (Device2.Auth) may be a digital signature to be verified based on the ssp2.Cert.DS to secure integrity of the information, and the digital signature data may be added as part of the second device authentication information. In addition, part or all of the second device authentication information (Device2.Auth) may be encrypted with the session key ShKey01 generated previously.

In operation 9035, the second SSP 960 may send the second device authentication information (Device2.Auth) generated in operation 9030 to the first SSP 910 through the second LBA 970 and the first LBA 920. In this case, the bundle transfer code may be further transferred.

In operation 9040, the first SSP 910 may verify the received second device authentication information (Device2.Auth). The first SSP 910 may verify validity of the ssp2.Cert.DS by verifying the received signature of the ssp2.Cert.DS. Furthermore, the first SSP 910 may check whether the received bundle family identifier (SPB family ID) and/or the bundle family manager identifier (SPB family custodian object ID) is a correctly configured value in association with the bundle to be transferred by the first SSP 910. Especially, the first SSP 910 may determine whether the bundle is an available bundle to be transferred to the second device by checking a bundle transfer setting associated with the received bundle identifier. Furthermore, the first SSP 910 may check whether the bundle may be normally installed and operated in the second device (e.g., in the SSP of the second device) based on the received bundle identifier and the received information of the second device. Moreover, the first SSP 910 may store the received transaction ID and/or the SSP ID of the second SSP 960. In addition, the first SSP 910 may bind the received transaction ID or the SSP ID of the second SSP 960 with a currently ongoing session or a bundle to be transferred.

In the process of verifying the second device authentication information (Device2.Auth), when the second device authentication information (Device2.Auth) includes encrypted data, the first SSP 910 may create a session key Shkey01 based on the ssp1.eSK.KA or the secret key corresponding to the public key for key agreement included in the ssp1.Cert.KA of the first SSP 910 and the received ssp2.ePK.KA, decode the encrypted data with the created session key ShKey01, and perform a verification process. Furthermore, in the process of verifying the second device authentication information (Device2.Auth), when the second device authentication information (Device2.Auth) includes a digital signature, the first SSP 910 may verify validity of the received digital signature based on the "ssp2.Cert.DS".

Moreover, in operation 9040, the first SSP 910 may generate a key pair of a public key "ssp1.bundle.ePK.KA" and a secret key "ssp1.bundle.eSK.KA" for asymmetric encryption to be used for key agreement. The key pair "ssp1.bundle.ePK.KA and ssp1.bundle.eSK.KA" may be configured with the same values as the "ssp1.ePK.KA and ssp1.eSK.KA" generated in operation 9015. Alternatively, the key pair "ssp1.bundle.ePK.KA and ssp1.bundle.eSK.KA" may be configured with the same value as the "public key included in the "ssp1.Cert.KA and the corresponding secret key". Furthermore, the first SSP 710 may create a session key ShKey02 based on the ssp1.bundle.eSK.KA and the ssp2.ePK.KA. When the secret key corresponding to the public key included in the ssp1.eSK.KA or the 'ssp1.Cert.Ka is reused for the ssp1.bundle.eSK.KA, the value of the session key ShKey02 may also be configured with the value of the ShKey01 created before.

Furthermore, in operation 9040, the first SSP 910 may configure a bundle and/or metadata associated with the bundle to be transferred to the second device 950. In this case, the first SSP 910 may identify the bundle to be transferred by the first SSP 910 based on the received bundle transfer code. The configured bundle may include the "ssp1.Cert.DS". The configured bundle may further include "ssp1.bundle.ePK.KA". The configured bundle may further include a transaction ID to identify the corresponding session. Furthermore, the configured bundle may further include at least one of a bundle identifier (SPB ID), a bundle family identifier (SPB family ID), or a bundle family manager identifier (SPB family custodian object ID) associated with the bundle to be transferred. In various embodiments, the bundle (or the metadata associated with the bundle) configured in operation 9040 may include a bundle transfer setting.

In various embodiments, digital signature data generated based on the ssp1.Cert.DS may be added to the bundle configured in operation 9040. In other words, digital signature data generated for some or entire components of the bundle may be added as part of the bundle. Furthermore, part or all of the configured bundle may be encrypted with the ShKey02.

In operation 9045, the first SSP 910 may send the bundle generated (configured) in operation 9040 to the second LBA 970 through the first LBA 920. In this case, the metadata associated with the bundle may be further transmitted. Furthermore, the bundle transfer setting associated with the bundle may be further transmitted. For example, the bundle transfer setting may be transmitted in a separate format (e.g., in a message) without being included in the bundle or the metadata. Moreover, the trusted SPBL list (trusted_SPBL_list) may be further transmitted.

In operation 9050, the second LBA 970 and the second SSP 960 may cooperate to install the bundle in the second device 950. When the metadata is transmitted, the second LBA 970 or the second SSP 960 may verify content included in the metadata. When the bundle transfer setting is transmitted, the second LBA 970 may forward the bundle transfer setting information to the second SSP 960. When the transaction ID is transmitted, the second LBA 970 or the second SSP 960 may check whether the received transaction ID is identical to a transaction ID that was used in the current session. When at least one of the bundle identifier (SPB ID), the bundle family identifier (SPB family ID), or the bundle family manager identifier (SPB family custodian object ID) is transmitted, the second LBA 970 or the second SSP 960 may determine whether the received identifier information is identical to identifier information of the bundle to be currently received. When the ssp1.Cert.DS is transmitted, the second SSP 960 may authenticate the first SSP 910 by verifying validity of the ssp1.Cert.DS. When the received data includes encrypted data, the second SSP 960 may create a session key ShKey02 based on the received ssp1.bundle.ePK.KA and the ssp2.eSK.KA of the second SSP 960, and decode and verify the encrypted data with the session key. When the digital signature is included in the received data, the second SSP 960 may verify the ssp1.Cert.DS and then verify validity of the digital signature based on the ssp1.Cert.DS. The second LBA 970 and the second SSP 960 may install the bundle in the second device 950 based on results of the checking, authenticating, and verifying.

FIG. 10 illustrates an example of a procedure for generating certificate information that may be supported by a second SSP of a second device at the request of a second LBA, according to some embodiments of the disclosure. FIG. 10 may correspond to an embodiment of a detailed procedure of operation 9005 of FIG. 9.

In FIG. 10, a second SSP of a second device may have information about a verifiable SPBL list as shown in FIG. 5.

Referring to FIG. 10, in operation 10001, the second SSP may receive a request for certificate information from the second LBA. In operation 1003, the second SSP may determine whether the request for certificate information sent from the second LBA includes a bundle family identifier and a bundle family manager identifier related to a particular bundle.

When the request for certificate information includes both the bundle family identifier and the bundle family manager identifier, the second SSP proceeds to operation 1010 to determine whether the second SSP supports the bundle family identifier and the bundle family manager identifier. In other words, the second SSP may determine whether there is certificate information set up for the bundle family identifier and the bundle family manager identifier in the information about the verifiable SPBL list. For example, referring to FIG. 5, when the bundle family identifier and the bundle family manager identifier such as (FID1, Oid1) are input from the second LBA, and there is a row corresponding to (FID1, Oid1) in the information about the verifiable SPBL list possessed by the second SSP, the second SSP may determine that the second SSP supports the bundle family identifier and the bundle family manager identifier (FID1, Oid1). Alternatively, when the bundle family identifier and the bundle family manager identifier such as (FID21, Oid6) are input from the second LBA, and there is not a row corresponding to (FID2, Oid6) in the information about the verifiable SPBL list possessed by the second SSP, the second SSP may determine that the second SSP does not support the bundle family identifier and the bundle family manager identifier (FID2, Oid6), especially not the bundle family manager identifier (Oid6).

When there is certificate information set up for the bundle family identifier and the bundle family manager identifier in the information about the verifiable SPBL list possessed by the second SSP in operation 10101, the second SSP may generate SSP information including the certificate information set up for the bundle family identifier and the bundle family manager identifier in operation 10102. Specifically, the second SSP may
a) select a Spbl INFO List in a row corresponding to the bundle family identifier (family ID) and the bundle family manager identifier (Oid) and configure ReceiverSpblVerification based on the certificate information included in the Spbl INFO List.
b) select a Trusted Spbl INFO List in a row corresponding to the bundle family identifier (family ID) and the bundle family manager identifier (Oid) and configure SenderSpblVerification based on the certificate information included in the Trusted Spbl INFO List.

When there is no certificate information set up for a combination of the bundle family identifier and the bundle family manager identifier included in the certificate information request in the information about the verifiable SPBL list possessed by the second SSP in operation 10101, the second SSP may determine whether there is certificate information including the bundle family identifier in the information about the verifiable SPBL list possessed by the SSP in operation 10103. For example, referring to FIG. 5, when the bundle family identifier and the bundle family manager identifier such as (FID2, Oid6) are input from the second LBA, the second SSP may determine that the second SSP does not support the combination of the bundle family identifier and the bundle family manager identifier (FID2, Oid6) (determine that it does not support the bundle family manager identifier Oid6 in particular) and proceed to operation 10103.

When there is certificate information set up for the bundle family identifier in the information about the verifiable SPBL list possessed by the second SSP in operation 10103, the second SSP may generate SSP information including the certificate information set up for the bundle family identifier in operation 10104. For example, the second SSP may determine that the second SSP supports only the bundle family identifier FID2 and select a value set for (FID2, *). Specifically, the second SSP may
a) select a Spbl INFO List in a row corresponding to (the bundle family identifier (family ID), *) and configure ReceiverSpblVerification based on the certificate information included in the Spbl INFO List.
b) select s Trusted Spbl INFO List in a row corresponding to (the bundle family identifier (family ID), *) and configure SenderSpblVerification based on the certificate information included in the Trusted Spbl INFO List.

When there is no certificate information set up for the bundle family identifier included in the certificate information request in the information about the verifiable SPBL list possessed by the second SSP in operation 10103, the second SSP may generate SSP information including certificate information to which the bundle family identifier and the bundle family manager identifier are not allocated in operation 10105. For example, referring to FIG. 5, when the bundle family identifier and the bundle family manager identifier such as (FID3, OID1) are input from the second LBA, the second SSP may determine that the second SSP does not support even the bundle family identifier FID3 and select a value set for (*, *) for the combination of the family ID and the Oid from among the information about the verifiable SPBL list possessed by the second SSP. The second SSP may then use the selected value to generate SSP information. Specifically, the second SSP may
a) select a Spbl INFO List in a row corresponding to (*, *) and configure ReceiverSpblVerification based on the certificate information included in the Spbl INFO List.
b) select a Trusted Spbl INFO List in a row corresponding to (*, *) and configure SenderSpblVerification based on the certificate information included in the Trusted Spbl INFO List.

When there is no bundle family manager identifier in the certificate information request in operation 10003, the second SSP may determine whether the bundle family identifier is included in the certificate information request sent from the second LBA in operation 10005. For example, referring to FIG. 5, when only the FID is input from the second LBA, the second SSP may proceed to operation 10005 because there is no Oid.

When a particular bundle family identifier is included in the certificate information request in operation 10005, the second SSP may determine whether a certificate setting including the bundle family identifier is present in the information about the verifiable SPBL list possessed by the second SSP in operation 10201. For example, referring to FIG. 5, when only FID2 is included in the certificate information request, the second SSP may determine whether SSP setting information having the FID2, for example, 530 or 550 of FIG. 5, is present in the information about the verifiable SPBL list possessed by the second SSP. The certificate setting including the bundle family identifier may refer to certificate information to which the bundle family identifier and the bundle family manager identifier are allocated or certificate information to which the bundle family identifier is allocated but the bundle family manager identifier is not allocated.

When there is a certificate setting including the bundle family identifier in the information about the verifiable SPBL list possessed by the second SSP, the second SSP may generate SSP information by using the certificate information including the bundle family identifier in operation 10202. Specifically, the second SSP may
a) select Spbl INFO List in a row (or rows) including the bundle family identifier (family ID) and configure ReceiverSpblVerification based on the certificate information included in the Spbl INFO List.
a) select a Trusted Spbl INFO List in a row (or rows) including the bundle family identifier (family ID) and configure SenderSpblVerification based on the certificate information included in the Spbl INFO List.

When there is no certificate setting including the bundle family identifier in operation 10201, the second SSP may generate SSP information to include certificate information to which the bundle family identifier and the bundle family manager identifier are not allocated in the information about the verifiable SPBL list possessed by the second SSP in operation 10203. More specifically, the second SSP may
a) select a Spbl INFO List in a row corresponding to (*, *) and configure ReceiverSpblVerification based on the certificate information included in the Spbl INFO List.
b) select a Trusted Spbl INFO List in a row corresponding to (*, *) and configure SenderSpblVerification based on the certificate information included in the Trusted Spbl INFO List.

When there is no bundle family identifier in the certificate information request, e.g., both the bundle family identifier and the bundle family manger identifier are not included in the certificate information request in operation 10005, the second SSP may generate SSP information to include the entire certificate information set up for the second SSP in operation 10007. For example, the second SSP may generate the SSP information to include all the information about the verifiable SPBL list as shown in FIG. 5.

FIG. 11 illustrates an example of a procedure in which a first SSP of a first device checks received information and generates authentication information to authenticate itself based on the information when receiving certificate information that may be supported from a second device, according to some embodiments of the disclosure. FIG. 11 may correspond to an embodiment of a detailed procedure of operation 9015 of FIG. 9.

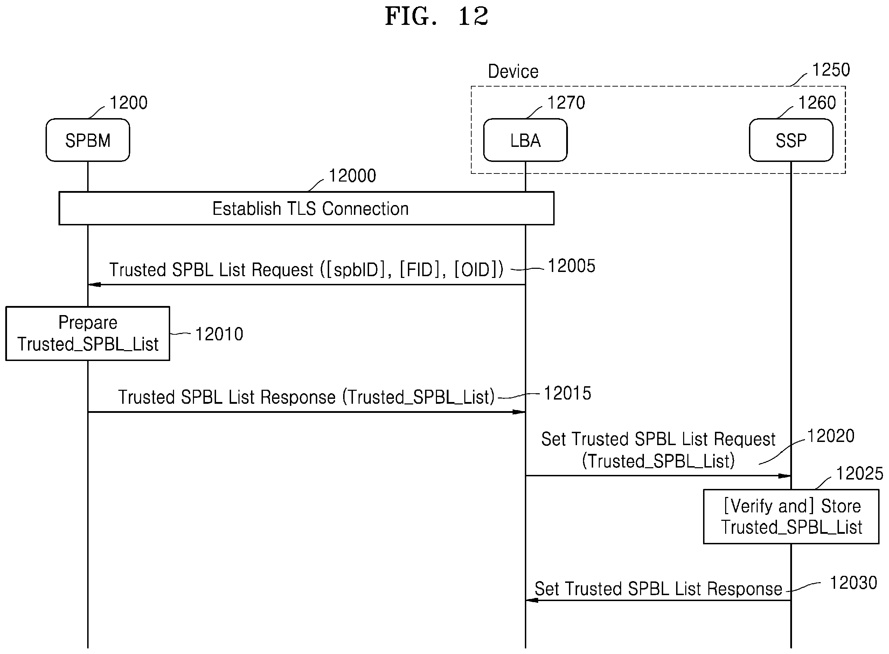

In FIG. 11, the first SSP of the first device may have information about a verifiable SPBL list as described in FIG. 5. Furthermore, the first SSP of the first device may further have the trusted SPBL list information as described above in connection with FIG. 6A or the trusted SPBL list information as described above in connection with FIG. 6B. The trusted SPBL list information as described above in connection with FIG. 6A or FIG. 6B may already exist in the first device before operation 9015 of FIG. 9 or may be obtained in operation 9015 of FIG. 9 as needed. A procedure in which the first device obtains the information about the trusted SPBL list as described above in connection with FIG. 6A or 6B will be described in detail later with reference to FIG. 12.

Referring to FIG. 11, in operation 11001, the first SSP of the first device receives, from the second device, certificate information (sspInfo) that may be supported.

In operation 11003, the first SSP of the first device may perform a verification process based on "ReceiverSpblVerification" of the received certificate information. Details of the verification process are as follows:
In operation 11100, the first SSP extracts the ReceiverSpblVerification from among the received certificate information. Subsequently, in operation 11105, the first SSP may perform the following procedure:
1. generate a transmitting SPBL list and a receiving SPBL list trusted by a secondary platform bundle loader (SPBL).
   The first SSP selects Spbl INFO List(s) and Trusted Spbl INFO List(s) based on the bundle family identifier and/or the bundle family manager identifier information transmitted by itself in operation 8020 of FIG. 8 and the verifiable SPBL list information possessed by itself as described in FIG. 5. A process of the first SSP selecting the Spbl INFO List(s) and Trusted Spbl INFO List(s) based on the bundle family identifier and/or the bundle family manager identifier information and the verifiable SPBL list information as described in FIG. 5 may refer to FIG. 10 as the process correspond to what is described about a process of the second device in FIG. 10. The Spbl INFO List selected based on the verifiable SPBL list is called a transmitting SPBL list, and the selected Trusted Spbl INFO List is called a receiving SPBL list trusted by the SPBL.
2. generate a receiving SPBL list trusted by the secondary platform bundle manager (SPBM), and/or a selected policy.

When the first SSP has the trusted SPBL list information as described in FIG. 6B, the first SSP selects trusted Spbl INFO list(s) and/or polices based on the bundle family identifier and/or the bundle family manager identifier that has been transmitted by the first SSP and the information about the trusted SPBL list possessed by the first SSP as described in FIG. 6B. Specifically, the first SSP may select the trusted Spbl INFO list(s) and/or policies according to at least one of the following methods:
a) select Trusted Spbl INFO list(s) and/or policies in a row including the corresponding family ID and Oid in FIG. 6B when the first SSP transmits the bundle family identifier and/or the bundle family manager identifier.
b) select Trusted Spbl INFO list(s) and/or policies in a row including the family ID and * for Oid in FIG. 6B, when the first SSP transmits only the bundle family identifier.
c) select Trusted Spbl INFO list(s) and/or policies in a row including the family ID and * for Oid in FIG. 6B when the first SSP has not transmitted any of the bundle family identifier and the bundle family manager identifier.

Alternatively, the first SSP may select Trusted INFO list(s) and/or policies through a procedure similar to the procedure as described in FIG. 10 instead of the processes a) to c). For example, the first SSP may select a row based on the bundle family identifier and/or the bundle family manager identifier information and the trusted SPBL list as described in FIG. 6B in the same method as that of selecting a row based on the bundle family identifier and/or the bundle family manager identifier information in FIG. 10 and the verifiable SPBL list as shown in FIG. 5, and then select trusted Spbl INFO list(s) and/or policies in the selected row.

The trusted Spbl INFO list selected based on the trusted SPBL list as described in FIG. 6B is called a receiving SPBL list trusted by the SPBM, and the policies are called selected policies.

When the first SSP has the trusted SPBL list as described in FIG. 6A corresponding to a bundle (e.g., which may be identified by an SPB ID) to be transferred by the first SSP, the first SSP may set a trusted Spbl INFO list included in the trusted SPBL list as described in FIG. 6A as a receiving SPBL list trusted by the SPBM and set the policies included in the trusted SPBL list as described in FIG. 6A as the selected policies.

3. generate a trusted receiving SPBL list.

The first SSP configures the trusted receiving SPBL list based on the aforementioned receiving SPBL list trusted by the SPBL and/or the receiving SPBL list trusted by the SPBM and/or the selected policies. Several possible examples of the trusted receiving SPBL list configured by the first SSP are as follows: The trusted receiving SPBL list may be
a) identical to the receiving SPBL list trusted by the SPBL,
b) identical to the receiving SPBL list trusted by the SPBM,
c) intersection of the receiving SPBL list trusted by the SPBL and the receiving SPBL list trusted by the SPBM, or
d) a union of the receiving SPBL list trusted by the SPBL and the receiving SPBL list trusted by the SPBM.

Which of a) to d) is to be used as the receiving SPBL list trusted by the first SSP may be selected depending on conditions such as i) whether the first SSP has information about the trusted SPBL list as described in FIG. 6A or 6B, ii) what is a policy of the device and/or the SSP manufacturer, iii) what is the selected policy which has been extracted earlier, etc.

4. select CiPkldToBeUsed.

The first SSP checks whether there is intersection between the extracted ReceiverSpblVerification and the trusted receiving SPBL list generated earlier, selects common certificate information of the two lists when there is the intersection, and use the selected information to configure the "CiPkldToBeUsed".

In operation 11005, the first SSP of the first device may perform another verification process on the received certificate information except the "ReceiverSpblVerification". Especially, among them, a verification procedure based on "SenderSpblVerification" is as follows. The first SSP checks whether there is intersection between the received SenderSpblVerification and the transmitting SPBL list as described above, selects common certificate information of the two lists when there is the intersection, and selects a certificate for key agreement and/or signature corresponding to the selected certificate information. Detailed description of another verification process performed by the first SSP based on Ssplnfo may correspond to what is described in operation 9015 of FIG. 9.

Furthermore, the verification processes included in 11005 and the verification process of 11003 are separate verification processes, and the verification process of each operation is unrelated to the sequence in which the other operations are performed.

In operation 11007, the first SSP of the first device generates authentication information (Device.Auth, i.e., Device1.Auth) for authenticating itself. Details of operation 11007 may correspond to what is described in operation 9015 of FIG. 9, so the detailed description thereof will be omitted.

FIG. 12 illustrates an example of a procedure in which a device 1250 obtains a "trusted SPBL list (trusted_SPBL_list)", according to some embodiments of the disclosure. The "trusted SPBL list (trusted_SPBL_list)" may be provided to the device 1250 by the service provider, the bundle management server or cooperation of the service provider and the bundle management server.

Referring to FIG. 12, according to various embodiments, the device 1250 may include at least one LBA and at least one SSP. For example, the device 1250 may include an LBA 1270 and an SSP 1260. For example, the device 1250 may be a device having the SSP 1260 and the LBA 1270 for controlling the SSP 1260 installed therein.

In various embodiments, a server 1200 may be a server operated by a service provider, a bundle management server, a server operated by cooperation of the service provider and the bundle management server, or an arbitrary server operated in conjunction with the service provider and/or the bundle management server. Although the term SPBM, which is one of possible examples of servers to indicate the server 1200, is used, the type of server is not limited to the SPBM as described above.

In operation 12000, transport layer security (TLS) connection may be established between the SPBM 1200 and the LBA 1270.

In operation 12005, the LBA 1270 may request a trusted SPBL list (trusted_SPBL_list) from the SPBM 1200. Information such as a bundle identifier (sbplD), a bundle family identifier (FID), a bundle family manger identifier (OID), etc., may also be transmitted in the request to the SPBM 1200 from the LBA 1270.

In operation 12010, the SPBM 1200 may generate a trusted SPBL list (trusted_SPBL_list). The trusted SPBL list (trusted_SPBL_list) may have a value pre-stored in the SPBM 1200, or a value newly generated at the request in operation 12005. Furthermore, the trusted SPBL list (trusted_SPBL_list) may have a value in a format as described in FIG. 6A or 6B. The generated trusted SPBL list (trusted_SPBL_list) may further include information signed by the SPBM 1200 to secure integrity of information.

In operation 12015, the trusted SPBL list (trusted_SPBL_list) generated in operation 12010 may be sent from the SPBM 1200 to the LBA 1270.

In operation 12020, the trusted SPBL list (trusted_SPBL_list) generated in operation 12010 may be sent from the LBA 1270 to the SSP 1260.

In operation 12025, the SSP 1260 may verify the received trusted SPBL list (trusted_SPBL_list). The verification process may include verifying validity of the signature generated in operation 12010. Furthermore, the SSP 1260 may store the received trusted SPBL list (trusted_SPBL_list).

In operation 12030, the SSP 1260 may transmit a result about the received trusted SPBL list (trusted_SPBL_list) to the LBA 1270. For example, the SSP 1260 may transmit success or failure of the verifying and/or the receiving to the LBA 1270.

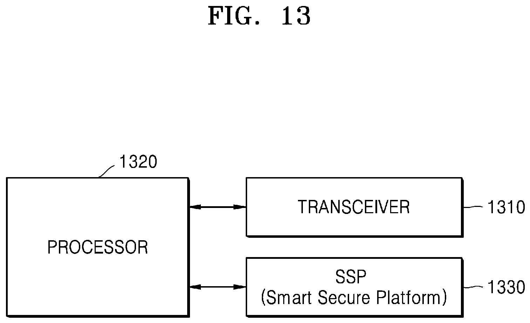

FIG. 13 is a diagram illustrating a configuration of a device, according to an embodiment of the disclosure.

As shown in FIG. 13, the device may include a transceiver 1310 and at least one processor 1320. The device may further include an SSP 1330. For example, the SSP 1330 may be inserted to the device or embedded in the device. The at least one processor 1320 may be referred to as a controller. The configuration of the device is not, however, limited to FIG. 13, and may include more or fewer components than shown in FIG. 13. In some embodiments, the transceiver 1310, the at least one processor 1320, and a memory (not shown) may be implemented in a single chip. Furthermore, in the case that the SSP 1330 is embedded, it may be implemented in the form of a single chip including the SSP 1330.

In various embodiments, the transceiver 1310 may transmit and receive a signal, information, data, etc., according to various embodiments of the disclosure, to and from a transceiver of another device or an external server. The transceiver 1310 may include an RF transmitter for up-converting the frequency of a signal to be transmitted and amplifying the signal and an RF receiver for low-noise amplifying a received signal and down-converting the frequency of the received signal. It is merely an embodiment of the transceiver 1310, and the elements of the transceiver 1310 are not limited to the RF transmitter and RF receiver. In addition, the transceiver 1310 may receive a signal on a wireless channel and output the signal to the at least one processor 1320, or transmit a signal output from the at least one processor 1320 on a wireless channel.

In various embodiments, the transceiver 1310 may transmit or receive information about an SSP included in another device, authentication information to authenticate the other device, authentication information to authenticate itself, a bundle transfer code, a bundle transfer setting, a bundle, request information for a trusted SPBL list (trusted_SPBL_list), the trusted SPBL list (trusted_SPBL_list), etc., to or from a transceiver of the other device or an external server.

In the meantime, the at least one processor 1320 is an element for generally controlling the device. The at least one processor 1320 may control a general operation of the device in various embodiments of the disclosure as described above.

The SSP 1330 may include a processor or a controller for installing and controlling a bundle, or may have an application installed therein.

In various embodiments, the at least one processor or the controller in the SSP 1330 may determine whether to transfer a particular bundle by checking the bundle transfer setting.

In various embodiments, the at least one processor or the controller in the SSP may generate a bundle transfer code to control a transfer process of the particular bundle.

In various embodiments, the at least one processor or the controller in the SSP may generate its SSP information, and check and verify SSP information of another SSP received from the outside.

In various embodiments, the at least one processor or the controller in the SSP may generate authentication information for verifying itself, and verify the authentication information of another SSP received from the outside.

In various embodiments, the SSP 1330 may generate a bundle, and cooperate with one or more processors 1320 to install the bundle. Furthermore, the SSP 1330 may manage the bundle.

In various embodiments, the SSP 1330 may verify and/or store a trusted SPBL list (trusted_SPBL_list).

In various embodiments, the SSP 1330 may be operated under the control of the processor 1320. Alternatively, the SSP 1330 may include a processor or a controller for installing and controlling a bundle, or may have an application installed therein. Part or the whole of the application may be installed in the SSP 1330 or a memory (not shown).

The device may further include a memory (not shown), and store a basic program for operation of the device, an application program, data like settings information, etc. Furthermore, the memory may include at least one storage medium of a memory in a flash memory type, a hard disk type, a multimedia card micro type, or a card type (e.g., SD or XD memory), a magnetic memory, a magnetic disc, an optical disk, a random access memory (RAM), a static RAM (SRAM), a read-only memory (ROM), a programmable ROM (PROM), or an electrically erasable programmable ROM (EEPROM). Moreover, the processor 1320 may use various programs, content, data, etc., stored in the memory to perform various operations.

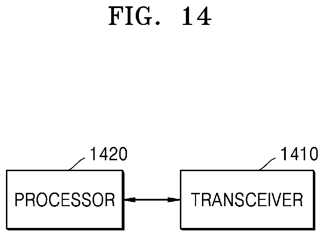

FIG. 14 is a diagram illustrating a configuration of a server, according to an embodiment of the disclosure. The server may be understood to have the same concept as the server as described in FIG. 12. As described above in FIG. 12, the server may be a server operated by a service provider, a bundle management server, a server operated by cooperation of the service provider and the bundle management server, or an arbitrary server operated in conjunction with the service provider and/or the bundle management server. Although the term 'bundle management server', which is one of possible examples of servers to indicate the server, is used, the type of server is not limited to the bundle management server as described above.

In some embodiments, the bundle management server may include a transceiver 1410 and at least one processor 1420. The configuration of the bundle management server is not, however, limited to FIG. 14, and may include more or fewer components than shown in FIG. 14. In some embodiments, the transceiver 1410, the at least one processor 1420, and a memory (not shown) may be implemented in a single chip.

In various embodiments, the transceiver 1410 may transmit and receive a signal, information, data, etc., according to various embodiments of the disclosure to and from a device. For example, the transceiver 1410 may receive a bundle identifier, a particular bundle family identifier, or a bundle family manager identifier from the device, or transmit a trusted SPBL list (trusted_SPBL_list) to the device.

The transceiver 1410 may include an RF transmitter for up-converting the frequency of a signal to be transmitted and amplifying the signal and an RF receiver for low-noise amplifying a received signal and down-converting the frequency of the received signal. It is merely an embodiment of the transceiver 1410, and the elements of the transceiver 1410 are not limited to the RF transmitter and RF receiver. In addition, the transceiver 1410 may receive a signal on a wireless channel and output the signal to the at least one processor 1420, or transmit a signal output from the at least one processor 1420 on a wireless channel.

In the meantime, the at least one processor 1420 is an element for generally controlling the bundle management server. The processor 1420 may control a general operation of the bundle management server in various embodiments of the disclosure as described above. The at least one processor 1420 may be referred to as a controller.

In some embodiments, the at least one processor 1420 may configure a trusted SPBL list (trusted_SPBL_list).

The bundle management server may further include a memory (not shown), and store a basic program, an application program, data like settings information, etc., for operation of the bundle management server. Furthermore, the memory may include at least one storage medium of a memory in a flash memory type, a hard disk type, a multimedia card micro type, or a card type (e.g., SD or XD memory), a magnetic memory, a magnetic disc, an optical disk, a RAM, an SRAM, a ROM, a PROM, or an EEPROM. Moreover, the processor 1420 may use various programs, content, data, etc., stored in the memory to perform various operations.

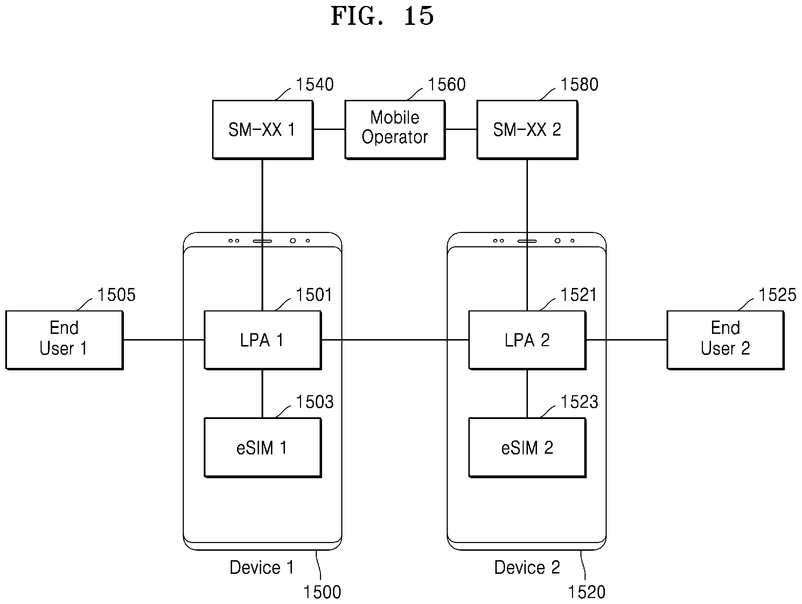

FIG. 15 illustrates an example of an interacting method of two devices for profile transfer between the two devices, according to an embodiment of the disclosure.

As shown in FIG. 15, a first device 1500 and a second device 1520 may be equipped with a first eSIM 1503 and a second eSIM 1523, respectively, and a profile (not shown) may be installed in each of the first eSIM 1503 and the second eSIM 1523. Furthermore, a first LPA 1501 and a second LPA 1521 may be installed in the first device 1500 and the second device 1520, respectively. The first eSIM 1503 and the second eSIM 1523 may be controlled by the first LPA 1501 and the second LPA 1521, respectively. A first user 1505 and a second user 1525 may control a profile installed in the eSIM (the first eSIM 1503 and the second eSIM 1523) of each device through the first LPA 150 and the second LPA 1521, respectively. The first user 1505 and the second user 1525 may be the same. Furthermore, the first LPA 1501 and the second LPA 1521 may be connected to each other for communication. An available connection method between the LPAs will refer to description of drawings, which will be described later.

A mobile operator 1560 may be connected to the first RSP server 1540 and the second RSP server 1580, the first LPA 1501 of the first device 1500 may be connected to the first RSP server 1540, and the second LPA 1521 of the second device 1520 may be connected to the second RSP server 1580. The first RSP server 1540 and the second RSP server 1580 may be or may not be the same. When one or more operator servers are included in the configuration, each operator server may be connected to each RSP server and at least one operator server may be connected to the same RSP server. Furthermore, the first RSP server 1540 and the second RSP server 1580 are illustrated in FIG. 15 as being configured as separate servers for convenience. However, depending on implementation and embodiments, one or more profile providing servers (SM-DP+) may be included in the configuration of the server, and one or more opening relay servers (SM-DS) that assist in establishing connection between a particular profile providing server and the device may also be included in the configuration of the server. The various configurations of the server may also be briefly denoted as a single RSP server in the following drawings.

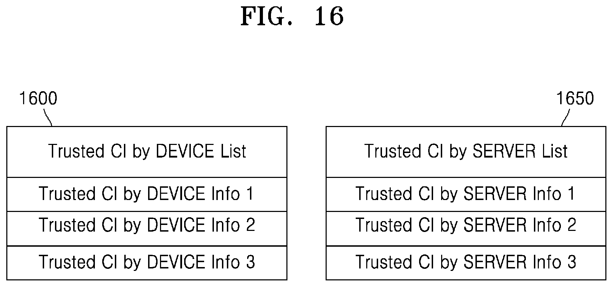

FIG. 16 illustrates a configuration of a "trusted Cl list (trusted_Cl_list)", according to some embodiments of the disclosure.

The trusted CI list 1600 stored in a device may be a list of eUICCs trusted by a device manufacturer and/or a eUICC manufacturer. Alternatively, the trusted CI list 1600 stored in the device may be a list of information that may be used to verify a eUICC trusted by the device manufacturer and/or a eUICC manufacturer. Specifically, Trusted CI by Device Info included in the trusted CI list 1600 stored in the device may be
a) information that may identify a eUICC trusted by the device manufacturer and/or the eUICC manufacturer, and
b) certificate information that may verify a eUICC trusted by the device manufacturer and/or the eUICC manufacturer. For example, the information may be public key information of a highest root certificate in a certificate chain of a eUICC whose credibility is to be verified. Alternatively, the information may be public key ID (PKID) information of the highest root certificate in the certificate chain of a eUICC whose credibility is to be verified.

The trusted CI list 1600 stored in a device may be information generated and/or provided by the device manufacturer and/or the eUICC manufacturer.

The trusted Cl list 1600 stored in the device may be stored in the device before profile transfer is performed. The trusted CI list 1600 stored in the device may be obtained from the device manufacturer and/or the eUICC manufacturer at a point in time required to perform profile transfer.

A trusted CI list 1650 provided from a server may refer to a list of eUICCs trusted by a mobile operator and/or an RSP server. Alternatively, the trusted Cl list 1650 provided from the server may be a list of information that may be used to verify a eUICC trusted by the mobile operator and/or the RSP server. Specifically, Trusted CI by Server Info included in the trusted CI list 1650 provided from the server may be
a) information that may identify a eUICC trusted by the mobile operator and/or the RSP server, and
b) certificate information that may verify a eUICC trusted by the mobile operator and/or the RSP server. For example, the information may be public key information of a highest root certificate in a certificate chain of a eUICC whose credibility is to be verified. Alternatively, the information may be public key ID (PKID) information of the highest root certificate in the certificate chain of a eUICC whose credibility is to be verified.

The trusted CI list 1650 provided from the server may be information generated and/or provided by the mobile operator and/or the RSP server.

The trusted CI list 1650 provided from the server may be stored in the device before profile transfer is performed. The trusted CI list 1650 provided from the server may be obtained from the mobile operator and/or the RSP server at a point in time required to perform profile transfer.

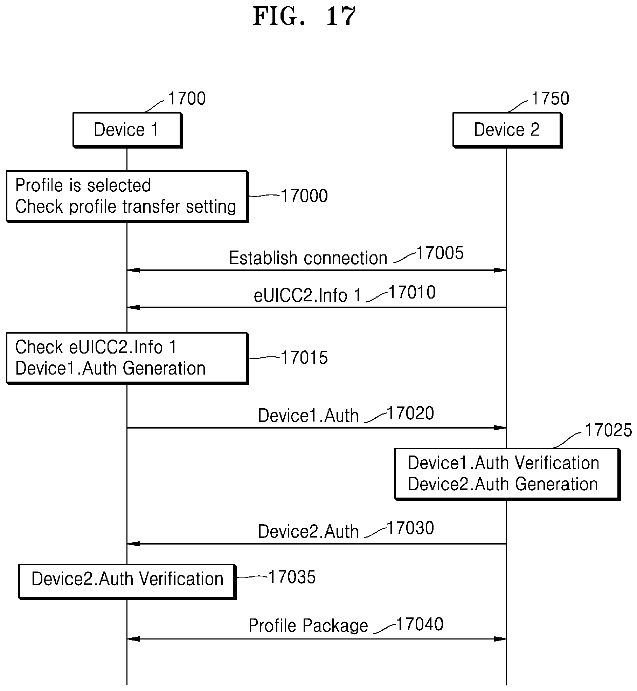

FIG. 17 illustrates a procedure in which a device transmits a profile to another device, according to an embodiment of the disclosure.

Although not shown in FIG. 17, a first device 1700 and a second device 1750 may each include a eUICC and an LPA as shown in FIG. 15. Although not shown in FIG. 17, the first device 1700 may have a profile transfer setting. In various embodiments, the profile transfer setting may be a policy about whether profile transfer between devices is possible, which may be generated by the mobile operator or the RSP server, or even by the aforementioned cooperation of the mobile operator and the RSP server. In various embodiments, the profile transfer setting in the device may be updated by the mobile operator or the RSP server, or even by the aforementioned cooperation of the mobile operator and the RSP server. Alternatively, at least one entity of the mobile operator or the RSP server may cooperate with the device to update the profile transfer setting. When and/or how the profile transfer setting is updated may be determined by a policy of the mobile operator, the RSP server, a device manufacturer, etc.

The profile transfer setting may include an indicator (or indication) to indicate whether transfer of the profile between devices is allowed. The profile transfer setting may further include an optional indicator that specifies what condition it is for transfer of the profile between the devices when the transfer is allowed. For example, in order for a device due to transmit a profile to authenticate a device to receive the profile, whether to perform authentication based on information received from the mobile operator and/or the RSP server (e.g., the trusted CI list provided from the server as shown in FIG. 16) may also be included in the profile transfer setting. Specifically, the mobile operator and/or the RSP server may provide authentication information relating to a device and/or a eUICC trusted and/or verified by themselves, and the device due to transmit the profile may authenticate whether the device and/or eUICC to receive the profile is trusted by the mobile operator and/or the RSP server based on the authentication information provided.

Furthermore, the profile transfer setting may further include at least one piece of signature information generated based on (or by using) information indicating whether transfer of the profile is allowed between the devices and/or information about which condition it is to allow the transfer when the transfer of the profile is allowed between the devices. The at least one piece of signature information may be information generated by at least one entity of e.g., an RSP server, a mobile operator, a device manufacturer, a eUICC, or a eUICC manufacturer. Furthermore, the at least one piece of signature information may further include authentication information about at least one (i.e., some or all) of e.g., an RSP server, a mobile operator, a device manufacturer, a eUICC, or a eUICC manufacturer. Moreover, the profile transfer setting may further include signature information of an RSP server for at least one (i.e., some or all) of the at least one piece of authentication information further included as described above.

Referring to FIG. 17, in operation 17000, a profile to be transmitted may be selected (or determined). This selecting or determining may be performed by a procedure in which the user selects the profile in person through a UI provided by the first device 1700, the profile may be input to the first device 1700 through push input from a remote server, or the first device 1700 may read out the corresponding information by accessing the remote server. When the first device 1700 provides a UI for the user, a list of all the profiles installed in the device may be provided or a list of profiles currently available for transfer may be provided through the UI. When a list of profiles that are not available for transfer is provided, additional information indicating transfer availability of the profile shown in the list may be further presented in the UI. Furthermore, information of a profile or information of a transfer policy of the profile in addition to the aforementioned list of profiles may be optionally further provided through the UI.

In operation 17000, the first device 1700 may determine (or identify) whether the profile is transferable by checking the profile transfer setting. Based on a result of the determining or identifying whether the profile selected (or determined) to be transferred is transferable, a procedure for transmitting the selected (or determined) profile to the second device 1750 may be performed. For example, the first device 1700 may perform operation 17005 based on a result of the determining or identifying whether the profile is transferable. Furthermore, in order for the first device 1700 to authenticate the second device 1750 after checking the profile transfer setting, the first device 1700 may determine whether to perform authentication based on information received from the mobile operator and/or the RSP server (e.g., the trusted CI list provided from the server as shown in FIG. 16).

In operation 17005, a connection between the first device 1700 and the second device 1750 may be established. For example, the connection between the first device 1700 and the second device 1750 may be a wireless communication connection. The connection between the first device 1700 and the second device 1750 may be a direct device-to-device connection (e.g., NFC, bluetooth, UWB, WiFi-direct, LTE device-to-device (D2D), or 5G D2D), or a long distance connection with a remote server (e.g., a relay server) located between the first device 1700 and the second device 1750.

In operation 17010, the second device 1750 may transmit its eUICC information (eUICC2.Info1). The eUICC2.Info1 may include an arbitrary character string (eUICC2.Challenge) generated by the eUICC of the second device. The eUICC2.Info1 may include information of a version supported by the eUICC of the second device. The eUICC2.Info1 may include authentication information that may be used to verify the eUICC of the second device. The eUICC2.Info1 may include authentication information that may be used to verify the eUICC of another device.

In operation 17015, the first device 1700 may check the received eUICC2.Info1. The first device 1700 may use the received eUICC2.Info1 to determine whether there is a version supported by the first device 1700 among the eUICC versions supported by the second device. The first device 1700 may use the received eUICC2.Info1 to select certificate eUICC1.Cert to verify the first device 1700. The first device 1700 may use the received eUICC2.Info1 to select certificate information to be used by the second device 1750.

In this case, a detailed procedure in which the first device 1700 uses the received eUICC2.Info1 to select certificate information to be used by the second device 1750 is as follows:
The first device 1700 may have a trusted CI list stored in the device as described in FIG. 16. Furthermore, the first device 1700 may have a trusted CI list provided from a server as described in FIG. 16. The first device 1700 may use the trusted CI list stored in the device and the trusted CI list provided from the server to derive a trusted CI list. The trusted CI list may be
a) identical to the trusted Cl list stored in the device,
b) identical to the trusted CI list provided from the device,
c) intersection of the trusted CI list stored in the device and the trusted CI list provided from the server, or
d) union of the trusted Cl list stored in the device and the trusted CI list provided from the server.

Which one of a) to d) will be used may be determined by a policy of at least one entity among an RSP server, a mobile operator, a device manufacturer, and a eUICC manufacturer. Furthermore, when the profile transfer setting indicates that authentication needs to be performed based on information received from the mobile operator and/or the RSP server, the trusted Cl list provided from the server as in b) to d) may need to be used.

The first device 1700 may determine whether there is intersection between the trusted CI list derived and certificate information to be used to verify the eUICC of the second device, which is included in the eUICC2.lnfo1. The first device 1700 may select part or all of information present in the intersection of the trusted CI list derived and certificate information to be used to verify the eUICC of the second device, which is included in the eUICC2.Info1, and set the selected information to the certificate information to be used by the second device 1750.

In operation 17015, the first device 1700 may generate first device authentication information (Device1.Auth). The first device authentication information (Device1.Auth) may include part or all of the eUICC2.Info1. For example, the first device authentication information (Device1.Auth) may include eUICC2.Challenge received by the first device 1700. The first device authentication information (Device1.Auth) may include an arbitrary character string (eUICC1.Challenge) generated by the eUICC of the first device.

The first device authentication information (Device1.Auth) may include authentication information to be used by the second device 1750. The first device authentication information (Device1.Auth) may include authentication chain information relating to certificate eUICC1.Cert to verify the first device 1700 itself.

Part or all of the aforementioned first device authentication information (Device1.Auth) may be electrically signed by using the certificate eUICC1.Cert of the first device, and the electrically signed data may be included as part of the first device authentication information (Device1.Auth).

In operation 17020, the first device 1700 may transmit the first device authentication information (Device1.Auth) to the second device 1750.

In operation 17025, the second device 1750 may verify the received first device authentication information (Device1.Auth). The second device 1750 may check validity of the eUICC1.Cert included in the first device authentication information (Device1.Auth), and may further check validity of a signature included in the first device authentication information (Device1.Auth) based on the eUICC1.Cert. The second device 1750 may check whether a value of the eUICC2.Challenge included in the first device authentication information (Device1.Auth) is the same as a value of the eUICC2.Challenge transmitted by the second device 1750 in operation 17010. For example, when the eUICC1.Cert is valid, the signature included in the first device authentication information Device1.Auth is valid, and the value of the eUICC2.Challenge is the same, verification may succeed.

Based on a result of the verifying (e.g., success in the verifying), the second device 1750 may generate second device authentication information (Device2.Auth). The second device authentication information (Device2.Auth) may include part or all of the Device1.Auth. For example, the second device authentication information (Device2.Auth) may include eUICC1.Challenge received by the second device 1750. The second device authentication information (Device2.Auth) may include information eUICC2.Info2, which is information for eligibility check of the eUICC installed in the second device. The eUICC2.Info2 may be information used to determine whether a profile to be received later from the first device 1700 may be normally installed and operated in the eUICC of the second device 1750. For example, the eUICC2.Info2 may include hardware and/or software information of the eUICC equipped in the second device 1750.

The second device authentication information (Device2.Auth) may include authentication chain information relating to certificate eUICC2.Cert to verify the second device 1750 itself.

Part or all of the aforementioned second device authentication information (Device2.Auth) may be electrically signed by using the certificate eUICC2.Cert of the second device, and the electrically signed data may be included as part of the second device authentication information (Device2.Auth).

In operation 17030, the second device 1750 may transmit the second device authentication information (Device2.Auth) to the first device 1700.

In operation 17035, the first device 1700 may verify the received second device authentication information (Device2.Auth). The first device 1700 may check validity of the eUICC2.Cert included in the second device authentication information (Device2.Auth), and may check validity of the signature included in the second device authentication information (Device2.Auth) based on the eUICC2.Cert. The first device 1700 may check whether a value of the eUICC1.Challenge included in the second device authentication information Device2.Auth is the same as a value of the eUICC1.Challenge transmitted by the first device 1700 itself in operation 17020. For example, when the eUICC2.Cert is valid, the signature included in the second device authentication information Device2.Auth is valid, and the value of the eUICC1.Challenge is the same, verification may succeed.

Based on a result of the verifying (e.g., when the verification is successful), the first device 1700 may determine whether a profile to be transmitted by the first device 1700 itself may be normally installed and operated in the eUICC of the second device 1750 by checking information eUICC2.Info2 for eligibility check of the eUICC included in the second device authentication information Device2.Auth.

Based on a result of the determining in operation 17035, the first device 1700 may transmit a profile package to the second device 1750 in operation 17040. The second device 1750 may install the received profile package.

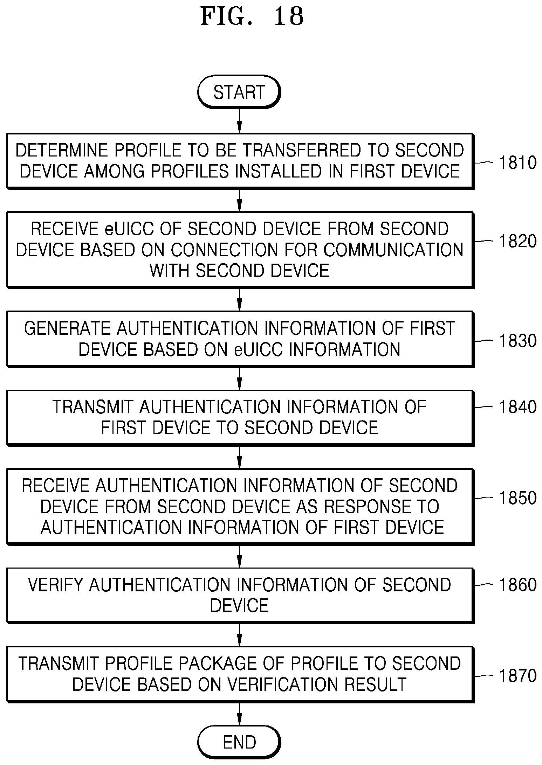

FIG. 18 illustrates operation of a first device, according to some embodiments of the disclosure.

Referring to FIG. 18, in operation 1810, the first device according to an embodiment of the disclosure may determine a profile to be transmitted to the second device among profiles installed in the first device.

In operation 1820, the first device may receive the second eUICC information of the second device from the second device based on connection for communication with the second device.

In operation 1830, the first device may generate authentication information of the first device based on the second eUICC information.

In operation 1840, the authentication information of the first device may be transmitted to the second device.

In operation 1850, the first device may receive, from the second device, authentication information of the second device as a response to the authentication information of the first device.

In operation 1860, the first device may verify the authentication information of the second device.

In operation 1870, the first device may transmit a profile package for a profile to the second device based on a result of the verifying.

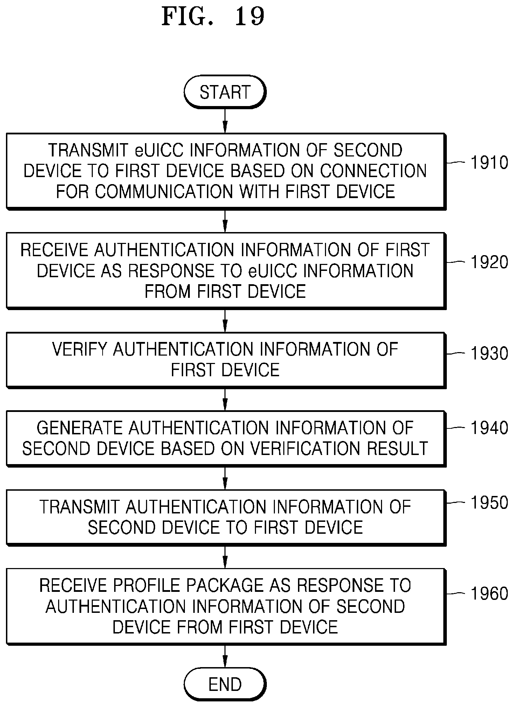

FIG. 19 illustrates operation of a second device, according to some embodiments of the disclosure.

Referring to FIG. 19, in operation 1910, the second device according to an embodiment of the disclosure may transmit eUICC information of the second device to the first device based on a connection for communication with the first device.

In operation 1920, the second device may receive, from the first device, authentication information of the first device as a response to the eUICC information.

In operation 1930, the second device may verify the authentication information of the first device.

In operation 1940, the second device may generate authentication information of the second device based on a result of the verifying.

In operation 1950, the second device may transmit the authentication information of the second device to the first device.

In operation 1960, the second device may receive, from the first device, a profile package as a response to the authentication information of the second device.

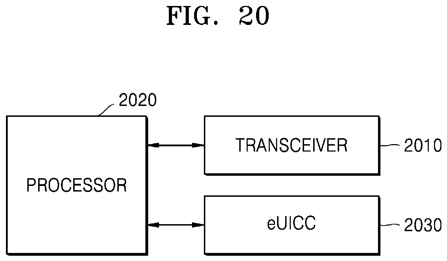

FIG. 20 is a diagram illustrating a configuration of a device, according to some embodiments of the disclosure.

Referring to FIG. 20, the device may include a transceiver 2010, a processor 2020, and a eUICC 2030. In the disclosure, the aforementioned devices may correspond to the device as will be described with reference to FIG. 20. For example, the first and second devices as mentioned in connection with FIGS. 15 to 19 may each include the components of the device as shown in FIG. 20.

The configuration of the device is not, however, limited to FIG. 20, and may include more or fewer components than shown in FIG. 20. In some embodiments, the transceiver 2010, the processor 2020, and the eUICC 2030 may be implemented in a single chip. Furthermore, the device may additionally include a memory, and the processor 2020 may be configured with at least one processor.

In various embodiments, the transceiver 2010 may transmit and receive a signal, information, data, etc., according to various embodiments of the disclosure, to and from a transceiver of another device or an external server. The transceiver 2010 may include an RF transmitter for up-converting the frequency of a signal to be transmitted and amplifying the signal and an RF receiver for low-noise amplifying a received signal and down-converting the frequency of the received signal. It is merely an embodiment of the transceiver 2010, and the elements of the transceiver 2010 are not limited to the RF transmitter and RF receiver. In addition, the transceiver 2010 may receive a signal on a wireless channel and output the signal to the processor 2020, and transmit a signal output from the processor 2020 on a wireless channel.

In the meantime, the processor 2020 is an element for generally controlling the device. The processor 2020 may control a general operation of the device in various embodiments of the disclosure as described above.

The device may further include a memory (not shown), and store a basic program for operation of the device, an application program, data like settings information, etc. Furthermore, the memory may include at least one storage medium of a memory in a flash memory type, a hard disk type, a multimedia card micro type, or a card type (e.g., SD or XD memory), a magnetic memory, a magnetic disc, an optical disk, a RAM, an SRAM, a ROM, a PROM, or an EEPROM. Moreover, the processor 2020 may use various programs, content, data, etc., stored in the memory to perform various operations.

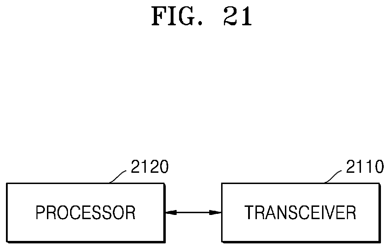

FIG. 21 is a diagram illustrating a configuration of a server, according to some embodiments of the disclosure.

Referring to FIG. 21, the server may include a transceiver 2110 and a processor 2120. In the disclosure, the aforementioned servers may correspond to the server as will be described with reference to FIG. 21. For example, the servers as mentioned in connection with FIGS. 15 to 19 (e.g., the operator server, the RSP server, SM-DP+, SM-DS, etc.) may each include the components of the server as shown in FIG. 21.

The configuration of the server is not, however, limited to FIG. 21, and may include more or fewer components than shown in FIG. 21. In some embodiments, the transceiver 2110 and the processor 2020 may be implemented in a single chip. Furthermore, the server may additionally include a memory, and the processor 2120 may be configured with at least one processor.

In various embodiments, the transceiver 2110 may transmit and receive a signal, information, data, etc., according to various embodiments of the disclosure to and from a device. The transceiver 2110 may include an RF transmitter for up-converting the frequency of a signal to be transmitted and amplifying the signal and an RF receiver for low-noise amplifying a received signal and down-converting the frequency of the received signal. It is merely an embodiment of the transceiver 2110, and the elements of the transceiver 2110 are not limited to the RF transmitter and RF receiver. In addition, the transceiver 2110 may receive a signal on a wireless channel and output the signal to the processor 2120, and transmit a signal output from the processor 2120 on a wireless channel.

In the meantime, the at least one processor 2120 is an element for generally controlling the server. The processor 2120 may control a general operation of the server in various embodiments of the disclosure as described above. The at least one processor 2120 may be referred to as a controller.

The server may further include a memory (not shown), and store a basic program, an application program, data like settings information, etc., for operation of the server. Furthermore, the memory may include at least one storage medium of a memory in a flash memory type, a hard disk type, a multimedia card micro type, or a card type (e.g., SD or XD memory), a magnetic memory, a magnetic disc, an optical disk, a RAM, an SRAM, a ROM, a PROM, or an EEPROM. Moreover, the processor 2120 may use various programs, content, data, etc., stored in the memory to perform various operations.

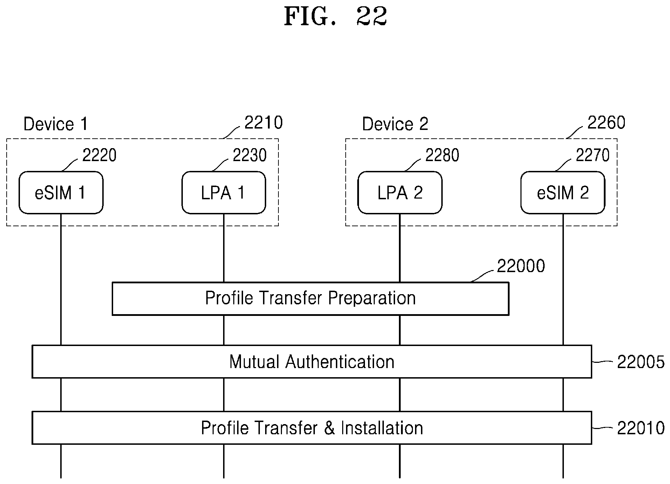

FIG. 22 is a conceptual diagram of a procedure in which one device transfers a profile to another device, according to some embodiments of the disclosure.

According to various embodiments, a device may include at least one LPA and at least one eSIM. For example, referring to FIG. 22, a first device 2210 may include a first LPA 2230 and a first eSIM 2220, and a second device 2260 may include a second LPA 2280 and a second eSIM 2270.

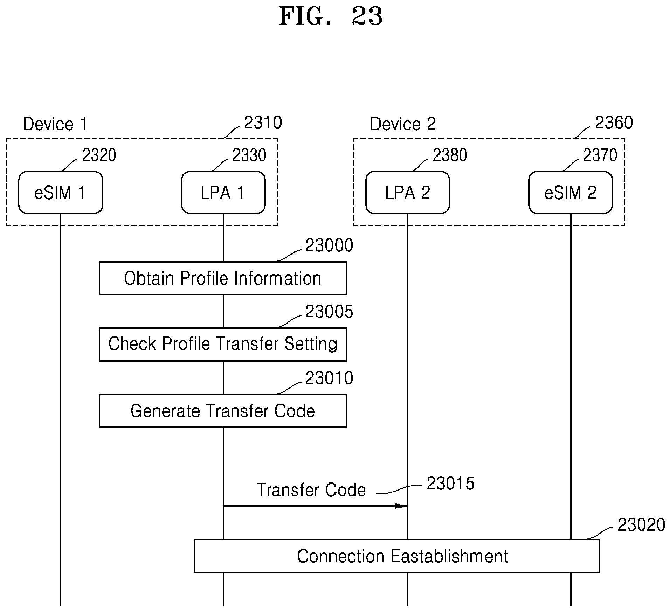

In operation 22000, the first LPA 2230 of the first device 2210 and the second LPA 2270 of the second device 2260 may perform a preparation procedure required for profile transfer (a profile transfer preparation procedure). A detailed procedure refers to the description of FIG. 23, which will be described later.

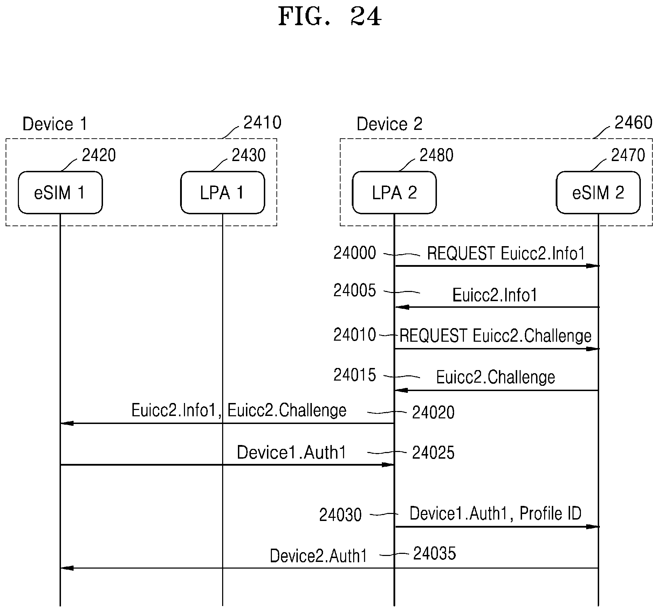

In operation 22005, a mutual authentication procedure between the first device 2210 and the second device 2260 may be performed. A detailed procedure refers to the description of FIG. 24, which will be described later.

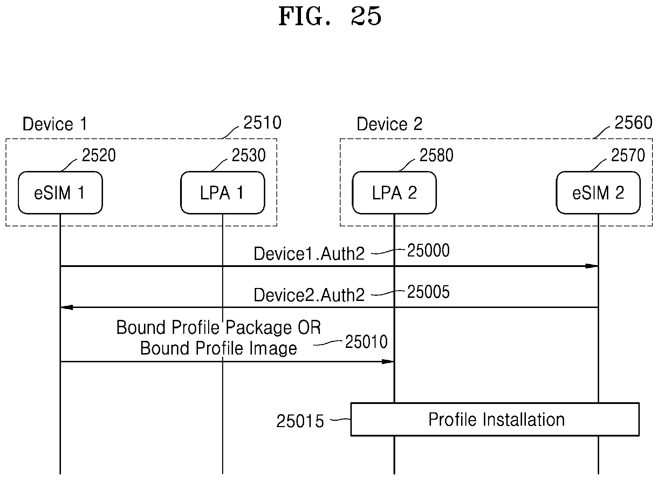

In operation 22010, a procedure in which a profile is transferred from the first device 2210 to the second device 2260 and installed in the second device may be performed. A detailed procedure refers to the description of FIG. 25, which will be described later.

FIG. 23 illustrates details of a profile transfer preparation procedure in the procedure proposed in FIG. 22, according to some embodiments of the disclosure.

Referring to FIG. 23, a device may include at least one LPA and at least one eSIM. For example, a first device 2310 may include a first LPA 2330 and a first eSIM 2320, and a second device 2360 may include a second LPA 2380 and a second eSIM 2370.

In various embodiments, the first device 2310 may have a pre-installed profile and further, metadata associated with the pre-installed profile. In various embodiments, the first device may have a profile classifier related to the pre-installed profile.

In various embodiments, the first device 2310 may further have a profile transfer setting related to the pre-installed profile.

The profile transfer setting may include an indicator (or indication) to indicate whether transfer of the profile between devices is allowed.

Furthermore, a setting for the mutual authentication method by which to transfer a profile between devices (e.g., a setting value indicating the setting) may be included in the profile transfer setting. For example, in order for a device due to transmit a profile to authenticate a device to receive the profile, whether to perform authentication based on information received from the mobile operator and/or the RSP server (e.g., the trusted Cl list provided from the server as shown in FIG. 16) may also be included in the profile transfer setting. When the need for the additional authentication is set up, the mobile operator and/or the RSP server may provide the authentication information relating to the trusted device and/or the eSIM to the device due to transmit the profile, which may in turn transmit the profile after authenticating the device to receive the profile based on the information about whether the device to receive the profile is trusted by the mobile operator and/or the RSP server.

Various factors or setting values included in the aforementioned profile transfer setting may be electrically signed by at least one entity among the RSP server, the mobile operator, the device manufacturer, the eUICC, or the eUICC manufacturer. The electronic signature value may be stored in the first device 2310 as part of or along with the profile transfer setting.

In operation 23000, the first LPA 2330 may obtain information of a profile to be transferred. Alternatively, the information of the profile to be transferred may be sent to the first LPA 2330. For example, the first LPA 2330 may obtain the information of the profile to be transferred by receiving a user input of the user selecting the profile through a UI provided by the first device 2310, receive the information of the profile to be transferred through push input from a remote server, or read out the information of the profile to be transferred by accessing the remote server.

In operation 23005, the first LPA 2330 may determine whether the profile is transferable between the devices based on the profile transfer setting.

In operation 23010, the first LPA 2230 may generate a profile transfer code. The profile transfer code may include a profile classifier of the profile to be transferred. Furthermore, the profile transfer code may include an address of an RSP server related to the profile to be transferred. The profile transfer code may further include other information indicating attributes of the profile (e.g., metadata or part of the metadata of the profile). The profile transfer code may include information required for connection between the two devices, which is made in operation 23020. For example, information required for wi-fi connection between two devices (e.g., an SSID and/or a BSSID of the second device 2360, a pre-shared key to be used for authentication for connection between the two devices, an IP address of the second device 2360, or a port number to be used for communication between the two devices) may be included in the profile transfer code.

In operation 23015, a profile transfer code generated in operation 23010 may be transmitted to the second LPA 2380 from the first LPA 2330. The profile transfer code may be transmitted in various methods.

For example, the first LPA 2330 may provide information to be transmitted to the second LPA 2380 to a first user of the first device through a UI of the first device. The first user may provide the received information to a second user of the second device. The second user may input the received information to the second LPA through the UI of the second device.

Alternatively, the first LPA 2330 may make the information to be sent to the second LPA 2380 in the form of an image (e.g., a QR code) to be displayed on the screen of the first device, and the second user may use the second device to scan the image displayed on the screen of the first device, thereby transmitting the information to the second LPA 2380.

Alternatively, the first LPA 2330 may establish connection between the first LPA 2330 and the second LPA 2380, and send information to be transmitted by using the established connection. The connection established between the first LPA 2330 and the second LPA 2380 may be a direct device-to-device connection (e.g., a wireless connection such as NFC, bluetooth, UWB, WiFi-direct, LTE device-to-device (D2D), or 5G D2D, or a wired connection through a cable), or a long distance connection with a remote server (e.g., a relay server) located between the first LPA 2330 and the second LPA 2380.

In operation 23020, a connection between the first LPA 2330 and the second LPA 2380 may be established or set up. When information required for the connection is transmitted in operation 23015, the first LPA 2330 and the second LPA 2380 may establish connection based on the information. The connection between the first LPA 2330 and the second LPA 2380 may be a direct device-to-device connection (e.g., a wireless connection such as NFC, bluetooth, UWB, WiFi-direct, LTE device-to-device (D2D), or 5G D2D, or a wired connection through a cable), or a long distance connection with a remote server (e.g., a relay server) located between the first LPA 2330 and the second LPA 2380.

FIG. 24 illustrates details of mutual authentication procedure between a first device 2410 and a second device 2460 in the procedure proposed in FIG. 22, according to some embodiments of the disclosure.

Referring to FIG. 24, the device may include at least one LPA and at least one eSIM. For example, a first device 2410 may include a first LPA 2430 and a first eSIM 2420, and a second device 2460 may include a second LPA 2480 and a second eSIM 2470.

In operation 24000, the second LPA 2480 may request euicc2.Info1 from the second eSIM 2470.

In operation 24005, the second eSIM 2470 may generate euicc2.lnfo. For example, euicc2.lnfo may include at least one of the following pieces of information:
- certificate information available for the first eSIM to verify the second eSIM
- certificate information available for the second eSIM to verify the first eSIM
- version information supported by the second device

Furthermore, the second eSIM 2470 may provide euicc2.lnfo to the second LPA 2480.

In operation 24010, the second LPA 2480 may request euicc2.Challenge from the second eSIM 2470.

In operation 24015, the second eSIM 2470 may generate euicc2.Challenge. euicc2.Challenge may be any random number generated by the second eSIM 2470. The second eSIM 2470 may provide euicc2.Challenge to the second LPA 2480.

In operation 24020, the second LPA 2480 may provide the euicc2.Info1 to the first eSIM 2420 through the first LPA 2430. Furthermore, the second LPA 2480 may provide the euicc2.Challenge to the first eSIM 2420 through the first LPA 2730. In this case, the first LPA 2730 may further provide a profile classifier of a profile to be transmitted to the first eSIM 2420.

In operation 24025, the following procedure may be performed.

The first eSIM 2420 may select certificate euicc1.Certificate to be used by itself based on the certificate information to be used by the second eSIM included in the euicc2.Info1 to verify the first eSIM.

The first eSIM 2420 may select a certificate to be used by the second eSIM 2470 based on the certificate information to be used by the first eSIM included in the euicc2.Info1 to verify the second eSIM. In this case, the selected certificate information or the information that may indicate the selected certificate may be called euiccCiPKldToBeUsed.

A procedure in which the first eSIM 2420 generates or selects euiccCiPKldToBeUsed based on the certificate information to be used by the first eSIM to verify the second eSIM may correspond to one of the following procedures:
a) the first eSIM checks whether there is intersection between the certificate information to be used to verify the second eSIM and a trusted CI list stored in the device as shown in FIG. 16, and then sets at least one of elements of the intersection to the euiccCiPKldToBeUsed when there is the intersection
b) the first eSIM checks whether there is intersection between the certificate information to be used to verify the second eSIM and a trusted CI list provided from a server as shown in FIG. 16, and then sets at least one of elements of the intersection to the euiccCiPKldToBeUsed when there is the intersection
c) the first eSIM checks whether there is intersection between the certificate information to be used to verify the second eSIM, the trusted CI list stored in the device as shown in FIG. 16, and the trusted CI list provided from the server as shown in FIG. 16, and then sets at least one of elements of the intersection to the euiccCiPKldToBeUsed when there is the intersection.

In other words, the first eSIM 2420 may check whether there is intersection between the certificate information to be used to verify the second eSIM, the trusted CI list stored in the device, and the trusted CI list provided from the server, and may then set at least one of elements of the intersection to the euiccCiPKldToBeUsed when there is the intersection.

A setting about which one of the above specified methods will be used may be included in the profile transfer setting.

In a case of using the trusted CI list provided from the server, the first eSIM 2420 may determine which server is used to provide the trusted CI list, based on the received profile classifier. Furthermore, in a case of using the trusted Cl list stored in the device, the first eSIM 2420 may determine which device is used to get the trusted Cl list stored therein based on the received profile classifier. In other words, there may be one or more of the trusted CI list stored in the device and a trusted CI list provided from the server in the device, and among them, a list (or lists) associated with a profile to be currently transferred may be selected and used.

The first eSIM 2420 may check a profile transfer setting of the profile associated with the received profile classifier. The first eSIM 2420 may check whether the profile may be transmitted through device-to-device transfer.

The first eSIM 2420 may check version information supported by the second device 2460 included in the euicc2.Info1 to determine whether there is a version supported by itself among them.

The first eSIM 2420 may generate a session ID (Transaction ID) used to indicate future communication with the second eSIM 2470.

The first eSIM 2420 may generate euicc1.Challenge. euicc1.Challenge may be any random number generated by the first eSIM 2420.

The first eSIM 2420 may electrically sign all and/or part of the following values: The electronic signature may be performed based on euicc1.Certificate.
- Transaction ID
- Euicc1.Challenge
- Euicc2.Challenge

The first eSIM 2420 may transmit the whole and/or part of the following data to the second LPA 2480 through the first LPA 2340.
- Transaction ID and/or euicc1.Challenge and/or euicc2.Challenge and their electronic signature values
- euiccCiPKldToBeUsed
- euicc1.Certificate

The above data provided may be called Device1.Auth1.

In operation 24030, the second LPA 2480 may transmit the whole and/or part of the following data to the second eSIM 2470.
- Device1.Auth1
- a profile classifier of a profile to be transmitted by the first device 2410 to the second device 2460

In operation 24035, the following procedure may be performed.

The second eSIM 2470 may verify validity of the euicc1.Certificate.

The second eSIM 2470 may verify an electronic signature value included in the Device1.Auth1.

The second eSIM 2470 may check whether the euicc2.Challenge included in the Device1.Auth has the same value as the euicc2.Challenge transmitted by the second eSIM 2470 in operation 24020.

The second eSIM 2470 may select the certificate euicc2.Certificate to be used by itself based on the euiccCiPKldToBeUsed.

The second eSIM 2470 may electrically sign all and/or part of the following values: The electronic signature may be performed based on euicc2.Certificate.
- Transaction ID
- Euicc1.Challenge
- Euicc2.Info2. The euicc2.Info2 may be information to be used for eligibility check on whether a profile transmitted by the first device to the second device may be installed and operated in the second device 2460. For example, the eUICC2.Info2 may include hardware and/or software information of the second eSIM 2470.
- a profile classifier of a profile to be transmitted by the first device 2410 to the second device 2460

The second eSIM 2470 may transmit the whole and/or part of the following data to the first eSIM 2420 through the second LPA 2480 and the first LPA 2340.
- Transaction ID and/or euicc1.Challenge and/or euicc2.Info2 and/or a profile classifier of a profile to be transmitted by the first device to the second device and their electronic signature values
- Euicc2.Certificate

The above data may be called Device2.Auth1.

FIG. 25 illustrates a detailed procedure in which a profile is transmitted from a first device 2510 to a second device 2560 and then installed in the second device, in the procedure proposed in FIG. 22, according to some embodiments of the disclosure.

Referring to FIG. 25, the device may include at least one LPA and at least one eSIM. For example, a first device 2510 may include a first LPA 2530 and a first eSIM 2520, and a second device 2560 may include a second LPA 2580 and a second eSIM 2570.

In operation 25000, the following procedure may be performed.

The first eSIM 2520 may verify validity of the euicc2.Certificate.

The first eSIM 2520 may verify an electronic signature value included in the Device2.Auth1.

The first eSIM 2520 may check whether the euicc1.Challenge included in the Device2.Auth has the same value as the euicc1.Challenge transmitted by the first eSIM 2520 in operation 25025.

The first eSIM 2520 may identify the profile classifier included in the Device2.Auth1 to specify a profile to be transmitted by the first eSIM 2520. Alternatively, the first eSIM 2520 may check whether the profile classifier included in the Device2.Auth1 matches the profile classifier received in 24020 of FIG. 24.

The first eSIM 2520 may check a profile transfer setting of the profile associated with the received profile classifier. The first eSIM 2520 may check whether the profile may be transmitted through device-to-device transfer.

The first eSIM 2520 may perform eligibility check on whether the profile may be normally installed and operated in the second device 2560 (e.g., the second eSIM 2570). In this case, for the eligibility check, the profile classifier and the euicc2.Info2 may be used.

The first eSIM 2520 may electrically sign the following values: The electronic signature may be performed based on euicc1.Certificate.
- Transaction ID

The first eSIM 2520 may transmit Transaction ID and/or the electronic signature to the second eSIM 2570 through the first LPA 2530 and the second LPA 2580. In this case, the value transmitted may be called Device1.Auth2.

In operation 25005, the following procedure may be performed.

The second eSIM 2570 may verify the electronic signature value included in the Device1.Auth2.

The second eSIM 2570 may create its encryption key pair (e.g., a public key otPK.EUICC2.KA and a corresponding secret key otSK.EUICC2.KA) required to create a session key to be used for encrypted communication with the first eSIM 2520.

The second eSIM 2570 may electrically sign all and/or part of the following values: The electronic signature may be performed based on euicc2.Certificate.
- Transaction ID
- otPK.EUICC2.KA

The second eSIM 2570 may transmit Transaction ID and/or the otPK.EUICC2.KA and their electronic signature values to the first eSIM 2520 through the second LPA 2580 and the first LPA 2530. In this case, the value transmitted may be called Device2.Auth2.

In operation 25010, the following procedure may be performed.

The first eSIM 2520 may verify the electronic signature value included in the Device2.Auth2.

The first eSIM 2520 may create its encryption key pair (e.g., a public key otPK.EUICC1.KA and a corresponding secret key otSK.EUICC1.KA) required to create a session key to be used for encrypted communication with the second eSIM 2570.

The first eSIM 2520 may create a session key for encrypted communication with the second device with the otSK.EUICC1.KA generated by the first eSIM 2520 itself and the received otPK.EUICC2.KA.

The first eSIM 2520 may prepare a profile (a profile image and/or a profile package) to be transmitted to the second device 2560. In this case, the prepared profile image or profile package may be called a bound profile package or a bound profile image. Furthermore, the bound profile package and the bound profile image may be collectively called a bound profile.

In this preparation process, all and/or part of the profile image and/or profile package to be transmitted may be encrypted with the session key created previously. Moreover, all and/or part of the profile image and/or profile package to be transmitted may be electrically signed by using the euicc1.Certificate, and the electronic signature value may be included as part of the bound profile. In addition, the otPK.EUICC1.KA may be included as part of the Bound Profile.

The first eSIM 2520 may transmit the bound profile to the second LPA 2580 through the first LPA 2530. In this case, metadata associated with the profile may also be transmitted. The metadata may be included as part of the bound file, or may be transmitted as separate data from the bound profile.

The first eSIM 2520 may delete the profile.

In operation 25015, the following procedure may be performed.

The second device 2560 may check the metadata transmitted.

The second device 2560 may receive an agreement of a user in relation to installing the received bound profile.

The second device 2560 may install the received bound profile in the second eSIM 2570. This procedure may be performed by cooperation between the second LPA 2580 and the second eSIM 2570. When there is encrypted data in the bound profile in this procedure, the second eSIM 2570 may create a session key with the otSK.EUICC2.KA and the otPK.EUICC1.KA and then decode data with the session key. Furthermore, when an electronic signature value is included in the bound profile, the second eSIM 2570 may verify validity of the electronic signature value based on the euicc1.Certificate.

According to some embodiments of the disclosure, the device and the server as described above with reference to FIGS. 22 to 25 may be the device of FIG. 20 and the server of FIG. 21, respectively. In other words, at least some of the embodiments as described in FIGS. 22 to 25 may be practiced by using the device of FIG. 20 and the server of FIG. 21.

In the embodiments of the disclosure, a component is represented in a singular or plural form. It should be understood, however, that the singular or plural representations are selected appropriately according to the situations presented for convenience of explanation, and the disclosure is not limited to the singular or plural form of the component. Further, the component expressed in the plural form may also imply the singular form, and vice versa.

Several embodiments of the disclosure have thus been described, but it will be understood that various modifications can be made without departing the scope of the disclosure. Thus, it will be apparent to those ordinary skilled in the art that the disclosure is not limited to the embodiments described, but can encompass not only the appended claims but the equivalents.

It is understood that various embodiments of the disclosure and associated terms are not intended to limit the aforementioned technology thereto, but encompass various changes, equivalents, and/or substitutions. Like reference numerals refer to like elements throughout the drawings. As used herein, the singular forms "a", "an" and "the" are intended to include the plural forms as well, unless the context clearly indicates otherwise. As used herein, the term "A or B", "at least one of A and/or B", "A, B, or C", or "at least one of A, B, and/or C" includes any and all combinations of one or more of the associated listed items. Terms like 'first', 'second', etc., may be used to indicate various components, but the components should not be restricted by the terms. These terms are only used to distinguish one element, component, region, layer or section from another element, component, region, layer or section. When it is said that a component (e.g., first component) is operatively or communicatively coupled with/to or connected to another component (e.g., second component), it is to be understood that the first component may be directly connected or coupled to the second component or may be indirectly connected or coupled to the second component via another new component (e.g., third component).

In the specification, the term "module", "device", "member", or "block" may refer to a unit implemented in hardware, software, or firmware, and may be interchangeably used with e.g., logic, logic block, part, or circuit. The module may be an integral part that performs one or more functions, or a minimum unit or a portion of the part. For example, the module may be configured with an application-specific integrated circuit (ASIC).

Various embodiments of the disclosure may be implemented in software (e.g., a program) including instructions stored in a machine- (e.g., computer-) readable storage medium (e.g., an internal or external memory). An apparatus may be a device that is able to call an instruction stored in the storage medium and operate according to the called instruction, and may include the device according to various embodiments. When the instruction is executed by a processor (e.g., the processor 1420 of FIG. 14), a function corresponding to the instruction may be performed directly by the processor or by other components under the control of the processor. The instruction may include a code generated or executed by a compiler or an interpreter.

The machine-readable storage medium may be provided in the form of a non-transitory storage medium. The term 'non-transitory' only means that the storage medium is tangible without including a signal, but does not help distinguish any data stored semi-permanently or temporarily in the storage medium.

The aforementioned methods according to the various embodiments of the disclosure may be provided in a computer program product. The computer program product may be a commercial product that may be traded between a seller and a buyer. The computer program product may be distributed in the form of a storage medium (e.g., a compact disc read only memory (CD-ROM)), through an application store (e.g., play store^{™}), or online. In the case of online distribution, at least part of the computer program product may be at least temporarily stored or arbitrarily created in a storage medium of a server of the manufacturer, a server of the application store, or a relay server. Each of the components (e.g., modules or programs) in the various embodiments of the disclosure may be provided in the singular or plural, and some of the aforementioned sub-components may be omitted from or other sub-components may be added to the various embodiments of the disclosure. Alternatively or additionally, some components (e.g., modules or programs) may be integrated in one entity but may perform the same or similar functions performed by the respective components before integration. According to various embodiments of the disclosure, processes performed by modules, programs, or other components may be performed sequentially, in parallel, repeatedly, or heuristically, or one or more of the processes may be performed in different order or omitted, or one or more additional processes may be further performed.

## Claims

1. A method performed by a first device in a communication system, the method comprising:
obtaining information about a bundle to be transmitted to a second device;
transmitting, to the second device, identification information of the bundle;
receiving, from the second device, certificate negotiation information associated with the bundle generated by the second device;
determining whether a secondary platform bundle loader, SPBL, of the second device is able to receive the bundle based on the certificate negotiation information and a verifiable SPBL list which is pre-stored in the first device; and
transmitting, to the second device, authentication information of the first device based on a result of the determining.

2. The method of claim 1, wherein the identification information of the bundle comprises at least one of a bundle family identity or a bundle family manager identifier for the bundle.

3. The method of claim 1, wherein the certificate negotiation information comprises receiver SPBL verification information determined based on the identification information of the bundle, and
wherein the determining of whether the SPBL of the second device is able to receive the bundle further comprises determining whether the receiver SPBL verification information corresponds to a trusted SPBL list in the verifiable SPBL list.

4. The method of claim 1,further comprising determining whether an SPBL of the first device is able to send the bundle based on the certificate negotiation information and the verifiable SPBL list which is pre-stored in the first device.

5. The method of claim 4, wherein the certificate negotiation information comprises sender SPBL verification information determined based on the identification information of the bundle, and
wherein the determining of whether the SPBL of the first device is able to send the bundle further comprises determining whether the sender SPBL verification information corresponds to a transmitting SPBL list in the verifiable SPBL list.

6. The method of claim 1, further comprising:
receiving, from the second device, authentication information of the second device;
verifying validity of the authentication information of the second device; and
transmitting, to the second device, the bundle based on a result of the verifying.

7. A method performed by a second device in a communication system, the method comprising:
receiving, from a first device, identification information of a bundle to be transmitted from the first device;
generating certificate negotiation information associated with the bundle based on the received identification information of the bundle and a verifiable SPBL list which is pre-stored in the second device;
transmitting, to the first device, the certificate negotiation information, wherein the certificate negotiation information is associated with whether a secondary platform bundle loader, SPBL, of the second device is able to receive the bundle; and
receiving, from the first device, authentication information of the first device.

8. The method of claim 7, wherein the identification information of the bundle comprises at least one of a bundle family identity or a bundle family manager identifier for the bundle.

9. The method of claim 7,further comprising:
verifying validity of the authentication information of the first device;
transmitting, to the first device, authentication information of the second device based on a result of the verifying; and
receiving, from the first device, the bundle.

10. A first device in a communication system, the first device comprising:
a transceiver; and
at least one processor,
wherein the at least one processor is configured to:
obtain information about a bundle to be transmitted to a second device,
transmit, to the second device via the transceiver, identification information of the bundle,
receive, from the second device via the transceiver, certificate negotiation information associated with the bundle generated by the second device,
determine whether a secondary platform bundle loader, SPBL, of the second device is able to receive the bundle based on the certificate negotiation information and a verifiable SPBL list which is pre-stored in the first device, and
transmit, to the second device via the transceiver, authentication information of the first device based on a result of the determining.

11. The first device of claim 10, wherein the identification information of the bundle comprises at least one of a bundle family identity or a bundle family manager identifier for the bundle.

12. The first device of claim 10, wherein the certificate negotiation information comprises receiver SPBL verification information determined based on the identification information of the bundle, and
wherein the determining of whether the SPBL of the second device is able to receive the bundle further comprises determining whether the receiver SPBL verification information corresponds to a trusted SPBL list in the verifiable SPBL list.

13. The first device of claim 10, wherein the at least one processor is further configured to determine whether an SPBL of the first device is able to send the bundle based on the certificate negotiation information and the verifiable SPBL list which is pre-stored in the first device.

14. The first device of claim 13, wherein the certificate negotiation information comprises sender SPBL verification information determined based on the identification information of the bundle, and wherein the determining of whether the SPBL of the first device is able to send the bundle further comprises determining whether the sender SPBL verification information corresponds to a transmitting SPBL list in the verifiable SPBL list

15. A second device in a communication system, the second device comprising:
a transceiver; and
at least one processor,
wherein the at least one processor is configured to:
receive, from a first device via the transceiver, identification information of a bundle to be transmitted from the first device,
generate certificate negotiation information associated with the bundle based on the received identification information of the bundle and a verifiable SPBL list which is pre-stored in the second device,
transmit, to the first device via the transceiver, the certificate negotiation information, wherein the certificate negotiation information is associated with whether a secondary platform bundle loader, SPBL, of the second device is able to receive the bundle, and
receive, from the first device via the transceiver, authentication information of the first device.

## Patentansprüche

1. Verfahren, das durch eine erste Vorrichtung in einem Kommunikationssystem durchgeführt wird, wobei das Verfahren Folgendes umfasst:
Erlangen von Informationen über ein Bündel, das an eine zweite Vorrichtung zu übertragen ist;
Übertragen von Identifikationsinformationen des Bündels an die zweite Vorrichtung;
Empfangen, von der zweiten Vorrichtung, von Zertifikatsverhandlungsinformationen, die dem Bündel zugeordnet sind und die durch die zweite Vorrichtung erzeugt werden;
Bestimmen, ob ein sekundärer Plattformbündellader, SPBL, der zweiten Vorrichtung in der Lage ist, das Bündel zu empfangen, basierend auf den Zertifikatsverhandlungsinformationen und einer Liste verifizierbarer SPBL, die in der ersten Vorrichtung vorab gespeichert ist; und
Übertragen von Authentifizierungsinformationen der ersten Vorrichtung an die zweite Vorrichtung basierend auf einem Ergebnis des Bestimmens.

2. Verfahren nach Anspruch 1, wobei die Identifikationsinformationen des Bündels mindestens eines von einer Bündelfamilienidentität oder einer Bündelfamilienmanagerkennung für das Bündel umfassen.

3. Verfahren nach Anspruch 1, wobei die Zertifikatsverhandlungsinformationen Empfänger-SPBL-Verifizierungsinformationen umfassen, die basierend auf den Identifikationsinformationen des Bündels bestimmt werden, und
wobei das Bestimmen, ob der SPBL der zweiten Vorrichtung in der Lage ist, das Bündel zu empfangen, ferner Bestimmen, ob die Empfänger-SPBL-Verifizierungsinformationen einer Liste vertrauenswürdiger SPBL in der Liste verifizierbarer SPBL entsprechen, umfasst.

4. Verfahren nach Anspruch 1, ferner umfassend Bestimmen, ob ein SPBL der ersten Vorrichtung in der Lage ist, das Bündel zu senden, basierend auf den Zertifikatsverhandlungsinformationen und der Liste verifizierbarer SPBL, die in der ersten Vorrichtung vorab gespeichert ist.

5. Verfahren nach Anspruch 4, wobei die Zertifikatsverhandlungsinformationen Sender-SPBL-Verifizierungsinformationen umfassen, die basierend auf den Identifikationsinformationen des Bündels bestimmt werden, und
wobei das Bestimmen, ob der SPBL der ersten Vorrichtung in der Lage ist, das Bündel zu senden, ferner Bestimmen, ob die Sender-SPBL-Verifizierungsinformationen einer Liste übertragender SPBL in der Liste verifizierbarer SPBL entsprechen, umfasst.

6. Verfahren nach Anspruch 1, ferner umfassend:
Empfangen, von der zweiten Vorrichtung, von Authentifizierungsinformationen der zweiten Vorrichtung;
Verifizieren der Gültigkeit der Authentifizierungsinformationen der zweiten Vorrichtung; und
Übertragen des Bündels an die zweite Vorrichtung basierend auf einem Ergebnis des Verifizierens.

7. Verfahren, das durch eine zweite Vorrichtung in einem Kommunikationssystem durchgeführt wird, wobei das Verfahren Folgendes umfasst:
Empfangen von Identifikationsinformationen eines Bündels, das von der ersten Vorrichtung zu übertragen ist, von einer ersten Vorrichtung;
Erzeugen von Zertifikatsverhandlungsinformationen, die dem Bündel zugeordnet sind, basierend auf den empfangenen Identifikationsinformationen des Bündels und einer Liste verifizierbarer SPBL, die in der zweiten Vorrichtung vorab gespeichert ist;
Übertragen der Zertifikatsverhandlungsinformationen an die erste Vorrichtung, wobei die Zertifikatsverhandlungsinformationen dem zugeordnet sind, ob ein sekundärer Plattformbündellader, SPBL, der zweiten Vorrichtung in der Lage ist, das Bündel zu empfangen; und
Empfangen, von der ersten Vorrichtung, von Authentifizierungsinformationen der ersten Vorrichtung.

8. Verfahren nach Anspruch 7, wobei die Identifikationsinformationen des Bündels mindestens eines von einer Bündelfamilienidentität oder einer Bündelfamilienmanagerkennung für das Bündel umfassen.

9. Verfahren nach Anspruch 7, ferner umfassend:
Verifizieren der Gültigkeit der Authentifizierungsinformationen der ersten Vorrichtung;
Übertragen von Authentifizierungsinformationen der zweiten Vorrichtung an die erste Vorrichtung basierend auf einem Ergebnis des Verifizierens; und
Empfangen des Bündels von der ersten Vorrichtung.

10. Erste Vorrichtung in einem Kommunikationssystem, wobei die erste Vorrichtung Folgendes umfasst:
einen Sendeempfänger; und
mindestens einen Prozessor,
wobei der mindestens eine Prozessor zu Folgendem konfiguriert ist:
Erlangen von Informationen über ein Bündel, das an eine zweite Vorrichtung zu übertragen ist,
Übertragen von Identifikationsinformationen des Bündels über den Sendeempfänger an die zweite Vorrichtung,
Empfangen, von der zweiten Vorrichtung über den Sendeempfänger, von Zertifikatsverhandlungsinformationen, die dem Bündel zugeordnet sind und die durch die zweite Vorrichtung erzeugt werden,
Bestimmen, ob ein sekundärer Plattformbündellader, SPBL, der zweiten Vorrichtung in der Lage ist, das Bündel zu empfangen, basierend auf den Zertifikatsverhandlungsinformationen und einer Liste verifizierbarer SPBL, die in der ersten Vorrichtung vorab gespeichert ist, und
Übertragen von Authentifizierungsinformationen der ersten Vorrichtung an die zweite Vorrichtung über den Sendeempfänger basierend auf einem Ergebnis des Bestimmens.

11. Erste Vorrichtung nach Anspruch 10, wobei die Identifikationsinformationen des Bündels mindestens eines von einer Bündelfamilienidentität oder einer Bündelfamilienmanagerkennung für das Bündel umfassen.

12. Erste Vorrichtung nach Anspruch 10, wobei die Zertifikatsverhandlungsinformationen Empfänger-SPBL-Verifizierungsinformationen umfassen, die basierend auf den Identifikationsinformationen des Bündels bestimmt werden, und
wobei das Bestimmen, ob der SPBL der zweiten Vorrichtung in der Lage ist, das Bündel zu empfangen, ferner Bestimmen, ob die Empfänger-SPBL-Verifizierungsinformationen einer Liste vertrauenswürdiger SPBL in der Liste verifizierbarer SPBL entsprechen, umfasst.

13. Erste Vorrichtung nach Anspruch 10, wobei der mindestens eine Prozessor ferner dazu konfiguriert ist, zu bestimmen, ob ein SPBL der ersten Vorrichtung in der Lage ist, das Bündel zu senden, basierend auf den Zertifikatsverhandlungsinformationen und der Liste verifizierbarer SPBL, die in der ersten Vorrichtung vorab gespeichert ist.

14. Erste Vorrichtung nach Anspruch 13, wobei die Zertifikatsverhandlungsinformationen Sender-SPBL-Verifizierungsinformationen umfassen, die basierend auf den Identifikationsinformationen des Bündels bestimmt werden, und wobei das Bestimmen, ob der SPBL der ersten Vorrichtung in der Lage ist, das Bündel zu senden, ferner Bestimmen, ob die Sender-SPBL-Verifizierungsinformationen einer Liste übertragender SPBL in der Liste verifizierbarer SPBL entsprechen, umfasst.

15. Zweite Vorrichtung in einem Kommunikationssystem, wobei die zweite Vorrichtung Folgendes umfasst:
einen Sendeempfänger; und
mindestens einen Prozessor,
wobei der mindestens eine Prozessor zu Folgendem konfiguriert ist:
Empfangen von Identifikationsinformationen eines Bündels, das von der ersten Vorrichtung zu übertragen ist, von einer ersten Vorrichtung über den Sendeempfänger,
Erzeugen von Zertifikatsverhandlungsinformationen, die dem Bündel zugeordnet sind, basierend auf den empfangenen Identifikationsinformationen des Bündels und einer Liste verifizierbarer SPBL, die in der zweiten Vorrichtung vorab gespeichert ist,
Übertragen der Zertifikatsverhandlungsinformationen an die erste Vorrichtung über den Sendeempfänger, wobei die Zertifikatsverhandlungsinformationen dem zugeordnet sind, ob ein sekundärer Plattformbündellader, SPBL, der zweiten Vorrichtung in der Lage ist, das Bündel zu empfangen, und
Empfangen, von der ersten Vorrichtung über den Sendeempfänger, von Authentifizierungsinformationen der ersten Vorrichtung.

## Revendications

1. Procédé réalisé par un premier dispositif dans un système de communication, le procédé comprenant :
l'obtention d'informations concernant un lot à transmettre à un second dispositif ;
la transmission, au second dispositif, d'informations d'identification du lot ;
la réception, en provenance du second dispositif, d'informations de négociation de certificat associées au lot générées par le second dispositif ;
le fait de déterminer si un chargeur de lot de plate-forme secondaire, SPBL, du second dispositif est capable de recevoir le lot sur la base des informations de négociation de certificat et d'une liste SPBL vérifiable qui est pré-mémorisée dans le premier dispositif ; et
la transmission, au second dispositif, d'informations d'authentification du premier dispositif sur la base d'un résultat de la détermination.

2. Procédé de la revendication 1, dans lequel les informations d'identification du lot comprenant au moins l'une d'une identité de famille de lot ou d'un identifiant de gestionnaire de famille de lot pour le lot.

3. Procédé de la revendication 1, dans lequel les informations de négociation de certificat comprennent des informations de vérification SPBL de récepteur déterminées sur la base des informations d'identification du lot, et
dans lequel le fait de déterminer si le SPBL du second dispositif est capable de recevoir le lot comprend en outre le fait de déterminer si les informations de vérification SPBL du récepteur correspondent à une liste SPBL de confiance dans la liste SPBL vérifiable.

4. Procédé de la revendication 1, comprenant en outre le fait de déterminer si un SPBL du premier dispositif est capable d'envoyer le lot sur la base des informations de négociation de certificat et de la liste SPBL vérifiable qui est pré-mémorisée dans le premier dispositif.

5. Procédé de la revendication 4, dans lequel les informations de négociation de certificat comprennent des informations de vérification SPBL d'expéditeur déterminées sur la base des informations d'identification du lot, et
dans lequel le fait de déterminer si le SPBL du premier dispositif est capable d'envoyer le lot comprend en outre le fait de déterminer si les informations de vérification SPBL de l'expéditeur correspondent à une liste SPBL de transmission dans la liste SPBL vérifiable.

6. Procédé de la revendication 1, comprenant en outre :
la réception, en provenance du second dispositif, d'informations d'authentification du second dispositif ;
la vérification de la validité des informations d'authentification du second dispositif ; et
la transmission, au second dispositif, du lot sur la base d'un résultat de la vérification.

7. Procédé réalisé par un second dispositif dans un système de communication, le procédé comprenant :
la réception, en provenance d'un premier dispositif, d'informations d'identification d'un lot à transmettre en provenance du premier dispositif ;
la génération d'informations de négociation de certificat associées au lot sur la base des informations d'identification reçues du lot et d'une liste SPBL vérifiable qui est pré-mémorisée dans le second dispositif ;
la transmission, au premier dispositif, des informations de négociation de certificat, dans lequel les informations de négociation de certificat sont associées au fait qu'un chargeur de lot de plate-forme secondaire, SPBL, du second dispositif est capable de recevoir le lot ou non ; et
la réception, en provenance du premier dispositif, d'informations d'authentification du premier dispositif.

8. Procédé de la revendication 7, dans lequel les informations d'identification du lot comprenant au moins l'une d'une identité de famille de lot ou d'un identifiant de gestionnaire de famille de lot pour le lot.

9. Procédé de la revendication 7, comprenant en outre :
la vérification de la validité des informations d'authentification du premier dispositif ;
la transmission, au premier dispositif, d'informations d'authentification du second dispositif sur la base d'un résultat de la vérification ; et
la réception, en provenance du premier dispositif, du lot.

10. Premier dispositif dans un système de communication, le premier dispositif comprenant :
un émetteur-récepteur ; et
au moins un processeur ;
dans lequel l'au moins un processeur est configuré pour :
obtenir des informations concernant un lot à transmettre à un second dispositif,
transmettre au second dispositif par l'intermédiaire de l'émetteur-récepteur, des informations d'identification du lot,
recevoir, en provenance du second dispositif par l'intermédiaire de l'émetteur-récepteur, d'informations de négociation de certificat associées au lot générées par le second dispositif,
déterminer si un chargeur de lot de plate-forme secondaire, SPBL, du second dispositif est capable de recevoir le lot sur la base des informations de négociation de certificat et d'une liste SPBL vérifiable qui est pré-mémorisée dans le premier dispositif, et
transmettre, au second dispositif par l'intermédiaire de l'émetteur-récepteur, des informations d'authentification du premier dispositif sur la base d'un résultat de la détermination.

11. Premier dispositif de la revendication 10, dans lequel les informations d'identification du lot comprenant au moins l'une d'une identité de famille de lot ou d'un identifiant de gestionnaire de famille de lot pour le lot.

12. Premier dispositif de la revendication 10, dans lequel les informations de négociation de certificat comprennent des informations de vérification SPBL de récepteur déterminées sur la base des informations d'identification du lot, et
dans lequel le fait de déterminer si le SPBL du second dispositif est capable de recevoir le lot comprend en outre le fait de déterminer si les informations de vérification SPBL du récepteur correspondent à une liste SPBL de confiance dans la liste SPBL vérifiable.

13. Premier dispositif de la revendication 10, dans lequel l'au moins un processeur est en outre configuré pour déterminer si un SPBL du premier dispositif est capable d'envoyer le lot sur la base des informations de négociation de certificat et de la liste SPBL vérifiable qui est pré-mémorisée dans le premier dispositif.

14. Premier dispositif de la revendication 13, dans lequel les informations de négociation de certificat comprennent des informations de vérification SPBL d'expéditeur déterminées sur la base des informations d'identification du lot, et dans lequel le fait de déterminer si le SPBL du premier dispositif est capable d'envoyer le lot comprend en outre le fait de déterminer si les informations de vérification SPBL d'expéditeur correspondent à une liste SPBL de transmission dans la liste SPBL vérifiable.

15. Second dispositif dans un système de communication, le second dispositif comprenant :
un émetteur-récepteur ; et
au moins un processeur ;
dans lequel l'au moins un processeur est configuré pour :
recevoir, en provenance d'un premier dispositif par l'intermédiaire de l'émetteur-récepteur, des informations d'identification d'un lot à transmettre en provenance du premier dispositif,
générer des informations de négociation de certificat associées au lot sur la base des informations d'identification reçues du lot et d'une liste SPBL vérifiable qui est pré-mémorisée dans le second dispositif,
transmettre, au premier dispositif par l'intermédiaire de l'émetteur-récepteur, des informations de négociation de certificat, dans lequel les informations de négociation de certificat sont associées au fait qu'un chargeur de lot de plate-forme secondaire, SPBL, du second dispositif est capable de recevoir le lot ou non, et
recevoir, en provenance du premier dispositif par l'intermédiaire de l'émetteur-récepteur, des informations d'authentification du premier dispositif.
